# EUROPEAN PATENT APPLICATION

(11) **EP 4 406 926 A1**
(43) Date of publication of application: **31.07.2024**
(21) Application number: 22871204.8
(22) Date of filing: 26.09.2022
(51) Int. Cl.: C04B 28/00, C04B 12/00, B22C 1/18, C01B 33/26, B21J 9/02, B30B 15/02

(54) **INORGANIC COMPOSITE, USE, MECHANICAL SHAPING TOOL, MOULD, MANUFACTURING METHOD**

(30) Priority: 24.09.2021 BR 102021019137
(71) Applicant: Instituto Hercílio Randon, 95181899 Caixas do Sul (BR)
(72) Inventor: BOARETTO, Joel, 95020-472 Caxias do Sul/RS (BR); CRUZ, Robinson Carlos Dudley, 95020-472 Caxias do Sul (BR)
(74) Representative: Grünecker Patent- und Rechtsanwälte PartG mbB
(86) International application number: PCT/BR2022/050377
(87) International publication number: WO 2023/044551

(57) **Abstract**

The present invention pertains to the fields of mechanical engineering, material engineering, tooling and environment conservation by reducing energy and raw material consumption. The invention includes an inorganic composite, the use of the inorganic composite in tools and moulds, a mechanical shaping tool, a mould and a method for manufacturing tools and moulds made of an inorganic composite. In one embodiment, the invention provides a mould and/or tool for mechanically shaping composite materials and metals, and a casting or injection-moulding mould, these moulds or tools having characteristic physico-chemical properties. In one embodiment, the manufacturing method ensures fast, high-quality and low-cost manufacture while reducing energy and raw material consumption, rendering industrial production by shaping structural composite materials economically viable and environmentally advantageous.

## Description

### Field of the Invention

The present invention relates to an inorganic composite, the use of inorganic composite in tools and molds, a mechanical forming tool, a mold, and a process for manufacturing inorganic composite tools and molds. In an embodiment, the invention provides a mold and/or mechanical forming tool for composite materials, metal forming, casting or injection mold, said molds or tools having peculiar physicochemical properties. In an embodiment, the manufacturing process provides fast, low-cost, high-quality manufacture and reduced energy and raw material consumption, making industrial production economically viable by forming structural composite materials and bringing environmental advantages. The present invention belongs to the fields of mechanical engineering, materials engineering, tooling and environmental preservation by reducing energy and raw material consumption. The technology defined in the present invention can be considered a green technology as it involves waste management including treatment of waste and reuse of used materials. Among the ingredients that make up the composite matrix of the present invention, waste from various industrial sectors can be used, as it can be seen in greater detail below.

### Background of the Invention

Structural composite materials have shown excellent results compared to metallic materials, often presenting superior physicochemical properties. However, structural composite materials still do not have a significant share in industrial production, mainly due to the complexity and high cost of their tooling.

In the forming of structural composite materials, the industrial unfeasibility lies in the manufacture of metallic tools due to their high cost and extremely high weight, the technical tools being made of a metallic matrix made of special steel.

Composite material parts have very specific characteristics, which is why there is a wide diversity of manufacturing processes for composite materials, such as SMC, high pressure, HP-RTM, infusion, among others. One of these processes is tape processing, a technique that has a great demand due to its practicality. In this process, a pre-impregnated fiber, soaked with PP, is formed in a hot mold, where it acts as a thin sheet when placed in a press, molding it into the shape of the press in a male-female mold heated to promote the chemical reaction of the components of the composite. From this, the final part is formed, just as a sheet of metal is formed by stamping on a standard tool. However, this technique poses a major problem to the industry, as composite materials require specific tools - and each type of part geometry has a different tool geometry or each tool needs to be edited between one part and another. Furthermore, tool wear must also be considered, as the steel used in these tools is a high-cost special steel.

The conventional manufacture of steel molds and tools is an extractive manufacture, in which a block is started and material must be extracted from this block until the geometry/cavity in the final shape of the part is reached. This occurs for both male and female molds of the tool. In this way, a lot of material is lost and wasted from the original block of steel, this material being a high-cost tool steel, which also needs heat treatment to prevent premature tool wear. In addition to the undesirable waste of material inherent to its machining, there is also the high energy consumption for its removal and for the heat treatments of the steel. Therefore, the high cost of producing conventional steel molds often makes industrial production unfeasible.

Composite materials have not yet reached a productive scale and importance in the market due to difficulties related to the processes or properties required. The present invention provides a solution to these problems.

In the search for the prior art in scientific and patent literature, no documents were found anticipating or suggesting the teachings of the present invention, so that the solution proposed herein has, as per the inventors, novelty and inventive activity compared to the prior art. Most of the documents with some similarity in terms of composition are related to cement materials used in civil construction, which are in no way related to the present invention.

WO 2020/053201 entitled "Inorganic Binder System Comprising Blast Furnace Slag and Solid Alkali Metal Silicate" discloses an inorganic cement system and a mortar or concrete using thereof. The product is intended for applications in civil construction and comprises at least (i) blast furnace slag; and (ii) a solid alkali metal silicate of formula SiC.2-2 M2), wherein M is selected from Li, Na, K or mixtures thereof, with the cement system being obtained by co-comminution of the mixture of ingredients.

CN104098281A entitled "Geopolymer composition, geopolymer material and preparation method thereof" discloses a geopolymer that has characteristics of organic, ceramic, and cement materials. The geopolymer of said document comprises: (i) 100 parts by weight of powder solid materials containing silicon, which in turn comprises 50 to 95% by weight of silicate aluminum material and 5 to 50% by weight of calcium-silicon material; and (ii) from 30 to 100 parts by weight of an alkaline stimulant, which may be a glass.

CN108751762A entitled "High-performance additive for cement fiberboard and preparation method thereof" discloses solutions for cement boards for use in civil construction. Cement boards are used in external walls and comprise materials containing silicon and calcium, and are reinforced with natural fibers and other auxiliary materials. In said document, a high-performance additive for cement boards is provided comprising (in parts by weight): 22 to 26 parts of rice husk ash, 6 to 10 parts of an ultrafine inorganic active filler composite, 3 to 6 parts of waste sand, 9 to 13 parts of powder sulfate slag doped with steel slag, 2 to 5 parts of micro-silica powder, and 1 to 3 parts of fibers.

KR101315371B1 entitled "High-strength concrete composition using fly ash geopolymer and method for manufacturing the concrete product" discloses a cement geopolymer composition for use in civil construction. The high-strength cementitious composition of the aforementioned document comprises (parts by weight): 20 to 30 parts of a water-soluble alkaline silicate, 15 to 20 parts of a water-soluble alkaline salt, 0.1 to 1 part of a water-reducing agent, and a geopolymer mortar mixed with 1 to 3 of a reinforcement material and 100 to 450 parts of a coarse aggregate with a particle diameter of 2.5 to 15 mm, 50 to 200 parts of a fine aggregate with a particle diameter of 1 to 2.5 mm, based on 100 parts of fly ashes.

Patent application BR 112013014685-0, entitled "Ultra-high Performance Geopolymer Concrete Composite Mixture (GCUAD) and Method of Manufacturing said Mixture" in free translation, discloses a geopolymer composite binder for ultra-high-performance concrete and its use in construction industry. Said composition comprises: (A) a binder comprising one or more selected from the group consisting of reactive aluminosilicate and reactive alkaline earth aluminosilicate; wherein the binder comprises 10 to 50% by weight of the GCUAD mixture; (B) an alkaline activator comprising an aqueous solution of metal hydroxide and metal silicate; (C) one or more aggregates; and (D) one or more fillers with a particle size of up to 75 µm, wherein the combined filler content is up to 35% by weight of a GCUAD mixture; wherein one type of one or more fillers has a particle size between 0.05 and 1 µm, and is selected from the group consisting of active silica, precipitated silica, ultrafine calcium carbonate, micron alumina, and submicron particles of metal oxides; and wherein the other type of one or more fillers has a particle size between 1 and 75 µm, and is selected from the group consisting of ground quartz, zeolite and ground glass.

Only two documents partially related to composites for molds and tools such as the one of the present invention were found, but they are quite different.

CN107199466A entitled "Numerical control processing machine tool" discloses a machine tool equipped with a numerical control system and the focus of said patent application is the numerical control system itself, that is, it is in no way related to the present invention. Said document describes that the tool includes several components, including a tool bed that is made of polymer concrete equipped with static hardness, high bed natural frequency and good dynamic performance. However, details of the composition of said polymer concrete are not provided.

JP2020104445A titled "Resin Mold" discloses a resin mold used to replace a metal mold. The focus of the aforementioned document is to provide the resin mold with thermal conductivity efficiency and durability. The means to achieve said objects is the use of a multilayer mold with at least three layers, in which the inorganic powders proportions are adjusted. The inorganic powder content in the innermost layer is A%, that in the intermediate layer is B% and that in the outermost layer is C%, wherein the relation of proportions is A>B>C. Said solution, in order to include an intermediate layer with an intermediate content of inorganic powder, changes the physical properties between the layers and avoids or minimizes the occurrence of breaks or cracks. The preferred resin in the aforementioned document is the so-called "chemical wood" and the inorganic powder (present between 10 and 30% by weight) must increase conductivity, being selected from metallic powders, titanium oxide, alumina, aluminum nitride and boron nitride.

From what can be seen from the researched literature, the prior art lacks a solution that provides a mold and/or tool for mechanical forming of high-performance structural composite material. The prior art also lacks a process that provides fast, low-cost production, with high quality and reduced energy and raw material consumption. The invention makes the industrial production of a mold and/or mechanical forming tool of thermoplastic structural composite material technically and economically feasible and brings substantial environmental advantages, both in terms of energy savings and rational use of materials.

### Summary of the Invention

The present invention solves the prior-art problems through the development of molds and tools made of inorganic-cement material.

It is one of the objects of the invention to provide a mold and/or tool for mechanically forming of composite materials.

It is another object of the invention to provide a mold and/or tool for mechanical metal forming.

It is one of the objects of the invention to provide a mold for casting.

It is one of the objects of the invention to provide a mold for injection.

The tools or molds of the invention have peculiar physicochemical properties, resulting from the choice of ingredient proportions of the inorganic cement composite.

It is also an object of the present invention to provide an inorganic composite for mechanical forming tools and molds, that comprises a combination of a cement matrix with a reinforcing fiber.

In an embodiment of the composite, the cement matrix of the composite of the present invention results from the combination of at least one solid precursor with at least one alkaline activating solution.

In the present invention, the solid precursors of inorganic polymers can be natural raw materials and minerals, such as metakaolin, rocks and other clay minerals and minerals found in soil. Minerals derived from clay minerals, such as kaolin, are basically made up of SiO₂ and Al₂O₃, containing only a few traces of other metallic oxides. Minerals derived from rocks are mainly made up of SiO₂ and Al₂O₃, but they have significant amounts of Fe₂O₃, MgO, CaO, and K₂O, whose contents vary depending on the type of soil and the location from where they are extracted. These materials derived from clay minerals and rocks are predominantly crystalline. Therefore, it is necessary to carry out some type of thermal or mechanical treatment (grinding) to make them reactive. Commonly, inorganic polymers derived from these precursors are called geopolymers.

The present invention, in addition to enabling the use of composites in various types of industry, also revolutionizes the entire forming manufacturing industry, redesigning the existing matrix model. Before the invention, the machines were extremely complex and used a lot of energy to extract steel in matrix machining, wherein heat treatments require very high energy for the metals. All of this is replaced by the present invention, which is more economical both in the financial sense and in the sense of energy and environmental resources, in addition to providing ecological/environmental benefits - being classified as green technology. In this context, with the present invention, the industry that uses molds and tools can reduce energy consumption, reduce the emission of greenhouse gases and reduce the environmental impact, moving towards an industry allied with the environment. The technology defined in the present invention involves waste management including waste treatment and reuse of used materials. Waste from various industrial sectors can be used among the ingredients that make up the composite matrix of the present invention as it can be seen in greater detail below.

In the present invention, each tool or mold is made by choosing the concentrations of the ingredients, in order to provide the desired physical-chemical properties, within the concentration ranges foreseen below: (i) in the matrix, between 20 and 50 vol% of solid ingredients containing silicates and between 50 and 80% of alkaline activator solution; and (ii) as a reinforcement, between 5 and 25% of fibers.

Tools and mold of the invention have demonstrated compressive strength of up to 150 MPa, bending strength of up to 15 MPa, and shear strength of up to 40 MPa. In an embodiment, a forming tool demonstrated compressive strength of 83 MPa, bending strength of 7 MPa, and shear strength of 23 MPa.

In an embodiment, said solid ingredients are selected from blast furnace slag, fly ash, rice husk ash, providing low cost and various environmental benefits. In one embodiment, said fibers are selected from rock wool, glass fiber, steel fiber.

In a first object, the present invention shows an inorganic composite for mechanical forming tools and molds that comprises a combination of at least one cement matrix with at least one reinforcing fiber.

In a second object, the present invention discloses a mechanical forming tool of inorganic composite material.

In a third object, the present invention discloses an injection and/or stamping and/or casting mold of inorganic composite material.

In a fourth object, the present invention shows a process for manufacturing a mechanical forming tool and/or mold that comprises at least one of the steps of:
a. adding an alkaline activating solution to a mixture comprising a solid precursor, forming a cement matrix;
b. adding a reinforcing fiber;
c. adding the homogenized mixture into a pre-mold with desired tool or mold geometry; and
d. curing the mixture, which acquires final geometry of the part.

In a fifth object, the present invention shows the use of an inorganic composite comprising a combination of a cement matrix with a reinforcing fiber for the manufacturing of:
a. a mechanical forming tool;
b. an injection mold;
c. a stamping mold; and/or
d. a casting mold.

These and other objects of the invention will be immediately appreciated by those skilled in the art and will be described in detail below.

### Brief Description of the Figures

The following figures are presented below:
Fig. 1 shows the performance results of mechanical strength tests of molds prepared under different conditions. In A, the compressive strength results in MPa are shown; in B, the bending strength results in MPa are shown; in C, the shear strength results in MPa are shown; in D, the compressive strain results in % are shown; in E, the bending strain results in % are shown; in F, the shear strain results in % are shown. The bars numbered as 1 show the results obtained for prototype 1 and the bars numbered as 3 show the results obtained for prototype 3.

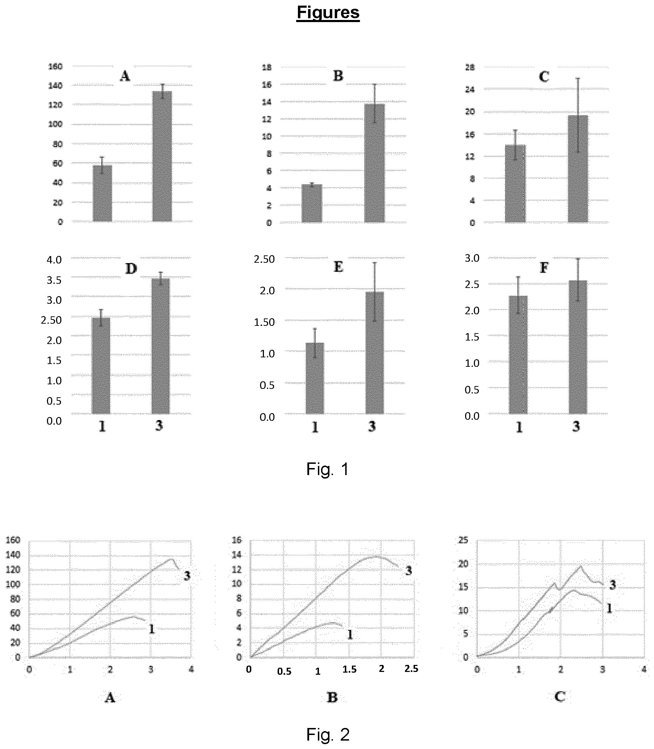

Fig. 2 shows three graphs with compressive, bending, and shear stress data, respectively, of molds prepared under different conditions. In A, the compressive stress results in MPa are shown on the ordinate and the % strain is shown on the abscissa; in B, the bending stress results in MPa are shown on the ordinate and the % strain is shown on the abscissa; in C, the shear stress results in MPa are shown on the ordinate and the % strain is shown on the abscissa. The curves numbered as 1 are from the results obtained for prototype 1 and the curves numbered as 3 are from the results obtained for prototype 3.
Fig. 3 shows photos illustrating the process for preparing a mold for mechanical forming of metal sheets or polymer composites. In 1, the step of mixing and homogenizing the components is shown, with a total time of 45 minutes; in 2, the molding step is shown, in this case made in a square box with a counter mold at the bottom; in 3, the step of placing the fresh composition of the invention is shown, being subsequently cured for 48h at 60°C; in 4, the mold obtained with the concavity for forming metal sheets or polymer composites is shown.
Fig. 4 shows photos of the mold assembly in a press (1), followed by forming (2) of a polymeric tape on the mold; and the tape obtained after the mechanical forming (3).
Fig. 5 shows two photos: on the left, the forming of a metal sheet on the mold in a press; on the right, a more detailed view of the cavity formed with adequate conformation to the curve of the mold.
Fig. 6 shows a photo of two casting molds. On the left and below, a mold with a circular cavity is shown; and on the left and above, the metal part obtained by placing the molten metal in said mold is shown. On the right and below, a mold with two rectangular cavities joined by a narrower channel is shown; and on the right and above, the metal part obtained by placing the molten metal in said mold is shown.
Fig. 7 shows an embodiment of a perspective view of the male-female mold of inorganic composite material of the present invention, in the closed position.
Fig. 8 shows the mold of the embodiment of Fig. 7 in an open position, where the male mold appears next to the female mold.
Fig. 9 shows another view of the mold of the embodiment of Fig. 7 in an open position, where the male mold appears next to the female mold.
Fig. 10 shows an embodiment of the female mold illustrated in Figs. 7-9.
Fig. 11 shows an embodiment of the male mold illustrated in Figs. 7-9.
Fig. 12 shows another view of the male mold illustrated in Figs. 7-9.
Fig. 13 illustrates the dimensional variation (%) as a function of the sample temperature on the vertical and horizontal axes of the composite dilatometry test described in Table 11.
Fig. 14 illustrates the dimensions variation (dL/L₀) as a function of the sample temperature on the vertical and horizontal axes of the composite dilatometry test described in Table 11.
Fig. 15 illustrates the dimensional variation (%) as a function of the sample temperature on the vertical and horizontal axes of the composite dilatometry test described in Table 12.
Fig. 16 illustrates the dimensions variation (dL/L₀) as a function of the sample temperature on the vertical and horizontal axes of the composite dilatometry test described in Table 12.
Fig. 17 illustrates the percentage of dL/L₀ variation as a function of the temperature variation of the composite dilatometry test described in Table 12.
Fig. 18 illustrates the dimensional variation (%) as a function of the sample temperature on the vertical and horizontal axes of the composite dilatometry test described in Table 13.
Fig. 19 illustrates the dimensions variation (dL/L₀) as a function of the sample temperature on the vertical and horizontal axes of the composite dilatometry test described in Table 13.
Fig. 20 illustrates the percentage of dL/L₀ variation as a function of the temperature variation of the composite dilatometry test described in Table 13.
Fig. 21 illustrates the dimensional variation (%) as a function of the sample temperature on the horizontal axis of the composite dilatometry test described in Table 14.
Fig. 22 illustrates the dimensions variation (dL/L₀) as a function of the sample temperature on the horizontal axis of the composite dilatometry test described in Table 14.
Fig. 23 illustrates the percentage of dL/L₀ variation as a function of the temperature variation of the composite dilatometry test described in Table 14.
Fig. 24 illustrates the dimensional variation (%) as a function of the sample temperature on the vertical and horizontal axes of the composite dilatometry test described in Table 15.
Fig. 25 illustrates the dimensions variation (dL/L₀) as a function of the sample temperature on the vertical and horizontal axes of the composite dilatometry test described in Table 15.
Fig. 26 illustrates the percentage of dL/L₀ variation as a function of the temperature variation of the composite dilatometry test described in Table 15.
Fig. 27 illustrates the dimensional variation (%) as a function of the sample temperature on the vertical and horizontal axes of the composite dilatometry test described in Table 16.
Fig. 28 illustrates the dimensions variation (dL/L₀) as a function of the sample temperature on the vertical and horizontal axes of the composite dilatometry test described in Table 16.
Fig. 29 illustrates the percentage of dL/L₀ variation as a function of the temperature variation of the composite dilatometry test described in Table 16.
Fig. 30 illustrates the dimensional variation (%) as a function of the sample temperature on the vertical and horizontal axes of the composite dilatometry test described in Table 17.
Fig. 31 illustrates the dimensions variation (dL/L₀) as a function of the sample temperature on the vertical and horizontal axes of the composite dilatometry test described in Table 17.
Fig. 32 illustrates the percentage of dL/L₀ variation as a function of the temperature variation of the composite dilatometry test described in Table 17.
Fig. 33 illustrates the dimensional variation (%) as a function of the sample temperature on the vertical and horizontal axes of the composite dilatometry test described in Table 18.
Fig. 34 illustrates the dimensions variation (dL/L₀) as a function of the sample temperature on the vertical and horizontal axes of the composite dilatometry test described in Table 18.
Fig. 35 illustrates the dimensional variation (%) as a function of the sample temperature on the vertical and horizontal axes of the composite dilatometry test described in Table 19.
Fig. 36 illustrates the dimensions variation (dL/L₀) as a function of the sample temperature on the vertical and horizontal axes of the composite dilatometry test described in Table 19.
Fig. 37 illustrates the percentage of dL/L₀ variation as a function of the temperature variation of the composite dilatometry test described in Table 19.
Fig. 38 illustrates the dimensional variation (%) as a function of the sample temperature on the vertical and horizontal axes of the composite dilatometry test described in Table 20.
Fig. 39 illustrates the dimensions variation (dL/L₀) as a function of the sample temperature on the vertical and horizontal axes of the composite dilatometry test described in Table 20.
Fig. 40 illustrates the percentage of dL/L₀ variation as a function of the temperature variation of the composite dilatometry test described in Table 20.
Fig. 41 illustrates the dimensional variation (%) as a function of the sample temperature on the vertical and horizontal axes of the composite dilatometry test described in Table 21.
Fig. 42 illustrates the dimensions variation (dL/L₀) as a function of the sample temperature on the vertical and horizontal axes of the composite dilatometry test described in Table 21.
Fig. 43 illustrates the percentage of dL/L₀ variation as a function of the temperature variation of the composite dilatometry test described in Table 21.
Fig. 44 illustrates the dimensional variation (%) as a function of the sample temperature on the vertical and horizontal axes of the composite dilatometry test described in Table 22.
Fig. 45 illustrates the dimensions variation (dL/L₀) as a function of the sample temperature on the vertical and horizontal axes of the composite dilatometry test described in Table 22.
Fig. 46 illustrates the percentage of dL/L₀ variation as a function of the temperature variation of the composite dilatometry test described in Table 22.
Fig. 47 illustrates the dimensional variation (%) as a function of the sample temperature on the vertical and horizontal axes of the composite dilatometry test described in Table 23.
Fig. 48 illustrates the dimensions variation (dL/L₀) as a function of the sample temperature on the vertical and horizontal axes of the composite dilatometry test described in Table 23.
Fig. 49 illustrates the percentage of dL/L₀ variation as a function of the temperature variation of the composite dilatometry test described in Table 23.
Fig. 50 illustrates the dimensional variation (%) as a function of the sample temperature on the vertical and horizontal axes of the composite dilatometry test described in Table 24.
Fig. 51 illustrates the dimensions variation (dL/L₀) as a function of the sample temperature on the vertical and horizontal axes of the composite dilatometry test described in Table 24.
Fig. 52 illustrates the percentage of dL/L₀ variation as a function of the temperature variation of the composite dilatometry test described in Table 24.
Fig. 53 illustrates the dimensional variation (%) as a function of the sample temperature on the vertical and horizontal axes of the composite dilatometry test described in Table 25.
Fig. 54 illustrates the dimensions variation (dL/L₀) as a function of the sample temperature on the vertical and horizontal axes of the composite dilatometry test described in Table 25.
Fig. 55 illustrates the percentage of dL/L₀ variation as a function of the temperature variation of the composite dilatometry test described in Table 25.
Fig. 56 illustrates the dimensional variation (%) as a function of the sample temperature on the vertical and horizontal axes of the composite dilatometry test described in Table 26.
Fig. 57 illustrates the dimensions variation (dL/L₀) as a function of the sample temperature on the vertical and horizontal axes of the composite dilatometry test described in Table 26.
Fig. 58 illustrates the percentage of dL/L₀ variation as a function of the temperature variation of the composite dilatometry test described in Table 26.
Fig. 59 illustrates the dimensional variation (%) as a function of the sample temperature on the vertical and horizontal axes of the composite dilatometry test described in Table 27.
Fig. 60 illustrates the dimensions variation (dL/L₀) as a function of the sample temperature on the vertical and horizontal axes of the composite dilatometry test described in Table 27.
Fig. 61 illustrates the percentage of dL/L₀ variation as a function of the temperature variation of the composite dilatometry test described in Table 27.
Fig. 62 illustrates the dimensional variation (%) as a function of the sample temperature on the vertical and horizontal axes of the composite dilatometry test described in Table 28.
Fig. 63 illustrates the dimensions variation (dL/L₀) as a function of the sample temperature on the vertical and horizontal axes of the composite dilatometry test described in Table 28.
Fig. 64 illustrates the percentage of dL/L₀ variation as a function of the temperature variation of the composite dilatometry test described in Table 28.
Fig. 65 illustrates the dimensional variation (%) as a function of the sample temperature on the vertical and horizontal axes of the composite dilatometry test described in Table 29.
Fig. 66 illustrates the dimensions variation (dL/L₀) as a function of the sample temperature on the vertical and horizontal axes of the composite dilatometry test described in Table 29.
Fig. 67 illustrates the percentage of dL/L₀ variation as a function of the temperature variation of the composite dilatometry test described in Table 29.
Fig. 68 illustrates the dimensional variation (%) as a function of the sample temperature on the vertical and horizontal axes of the composite dilatometry test described in Table 30.
Fig. 69 illustrates the dimensions variation (dL/L₀) as a function of the sample temperature on the vertical and horizontal axes of the composite dilatometry test described in Table 30.
Fig. 70A illustrates a comparison of the dimensional variation (%) as a function of the temperature (°C) on the horizontal axis for each sample as described in Tables 11 - 13,16, 22, and 28.
Fig. 70B illustrates a comparison of the dimensional variation (%) as a function of the temperature (°C) on the horizontal axis for each sample as described in Tables 14, 15, 17, 18, 19, and 27.
Fig. 70C illustrates a comparison of the dimensional variation (%) as a function of the temperature (°C) on the horizontal axis for each sample as described in Tables 23, 24, 29, and 30.
Fig. 70D illustrates a comparison of the dimensional variation (%) as a function of the temperature (°C) on the horizontal axis for each sample as described in Tables 20, 21, 25, and 26.
Fig. 71A illustrates a comparison of the dimensional variation (%) as a function of the temperature (°C) on the vertical axis for each sample as described in Tables 11-13, 16, 22, and 28.
Fig. 71B illustrates a comparison of the dimensional variation (%) as a function of the temperature (°C) on the vertical axis for each sample as described in Tables 15, 17, 18, 19, and 27.
Fig. 71C illustrates a comparison of the dimensional variation (%) as a function of the temperature (°C) on the vertical axis for each sample as described in Tables 23, 24, 29, and 30.
Fig. 71D illustrates a comparison of the dimensional variation (%) as a function of the temperature (°C) on the vertical axis for each sample as described in Tables 20, 21, 25, and 26.
Fig. 72 illustrates the components used in the quasi-static strength test. It also illustrates the components used in the dynamic strength test.
Fig. 73 illustrates the direction of load application in the quasi-static strength test.
Fig. 74 illustrates a graph of displacement (mm) as a function of the applied force for the three samples of the quasi-static strength test.
Fig. 75 illustrates the direction of load application in the dynamic strength test.
Fig. 76 illustrates a graph of the representative load application cycles in the dynamic strength test, showing the force (N) applied as a function of time (sec) for each test sample.
Fig. 77 illustrates a representative graph for sample 21-14-04 in the dynamic strength test, showing the displacement (mm) as a function of time (sec).
Fig. 78 illustrates a representative graph for sample 21-14-05 in the dynamic strength test, showing the displacement (mm) as a function of time (sec).
Fig. 79 illustrates a representative graph for sample 21-14-06 in the dynamic strength test, showing the displacement (mm) as a function of time (sec).

### Detailed Description of the Invention

The present invention solves several prior art problems related to conventional mechanical forming tools and/or molds, and provides composite material tools and/or molds with improved properties, in addition to reduced cost and improvements over other production limitations of conventional counterparts, which often makes them industrially unviable. Nevertheless, the technology defined in the present invention involves waste management including waste treatment and reuse of used materials. Among the ingredients that make up the composite matrix of the present invention, waste from various industrial sectors can be used, as it can be seen in greater detail below.

It is an object of the present invention to solve the problems of the technique and to provide molds and tools for mechanical forming of inorganic composites with peculiar physicochemical properties.

The inorganic composite of the invention is particularly useful for the manufacture of industrial tools, molds for forming metallic or composite components.

In an embodiment, the inorganic composite of the invention comprises an inorganic silicate base, making it possible to overcome several technical problems in the production of molds and tools with metallic materials.

Adjusting the desired properties of the tool or mold is done by adjusting the concentrations of the ingredients, within the ranges provided below: (i) in the matrix, between 20 and 50 vol% of solid ingredients containing silicates and between 50 and 80% of alkaline activating solution; and (ii) as a reinforcement, between 5 and 25% of fibers. Optionally, curing can be done at different temperatures.

In one embodiment, said solid precursors are selected from blast furnace slag, fly ash, rice husk ash, metakaolin, rocks and other clay minerals and minerals, and combinations thereof. In a non-limiting embodiment, said blast furnace slag has a d90 of about 45 µm or about 35 µm.

In one embodiment, said fibers are selected from metallic fibers and ceramic fibers. Non-limiting examples may be rock wool, glass fiber, steel fiber, basalt fiber, copper fiber, aluminosilicate fiber, alumina fiber, or combinations thereof.

In the context of the present invention, inorganic polymers represent a category of materials synthesized from raw materials rich in silicon (Si), aluminum (Al) and calcium (Ca), in addition to other metals in smaller quantities, such as iron (Fe) and magnesium (Mg). Depending on the precursor raw materials, these inorganic polymers can be classified as geopolymers, alkalinely activated materials or cement materials. For the polymerization of these inorganic raw materials to occur, alkaline solutions are used, which act as activators and catalysts for the reactions.

In the present invention, the solid precursors of inorganic polymers can be natural raw materials and minerals, such as metakaolin, rocks and other clay minerals and minerals found in soil. Minerals derived from clay minerals, such as kaolin, are basically made up of SiO₂ and Al₂O₃, containing only a few traces of other metallic oxides. Minerals derived from rocks are mainly made up of SiO₂ and Al₂O₃, but they have significant amounts of Fe₂O₃, MgO, CaO, and K₂O, whose contents vary depending on the type of soil and the location from where they are extracted. These materials derived from clay minerals and rocks are predominantly crystalline. Therefore, it is necessary to carry out some type of thermal or mechanical treatment (grinding) to make them reactive. Commonly, inorganic polymers derived from these precursors are called geopolymers.

In some embodiments of the invention, materials considered as industrial waste and by-products are used, such as blast furnace slag, fly ash and rice husk ash, which provides a reduction in production costs and brings environmental gains, taking advantage of industrial waste.

In an embodiment of the invention, blast furnace slag is used, which is waste from the pig iron production industry. This material is formed from the melting of impurities in iron ore, together with the addition of meltings, such as limestone (CaCOs) and dolomite (CaMg(CO₃)₂), which are separated by flotation. As a result, blast furnace slag has SiO₂, CaO and Al₂O₃ as its main constituents, and also a significant percentage of MgO. As a consequence of the high cooling rate of this material in the molten state, the solidified slag is predominantly glassy and, therefore, highly reactive. The inorganic polymers derived from these precursors are recognized as cement materials or alkalinely activated cements, due to some similarities with Portland cement.

In an embodiment of the invention, fly ash from thermoelectric plants is used, resulting from the melting and calcination of incombustible mineral impurities contained in mineral coal, which is burned to generate energy. These materials are mainly made up of SiO₂, Al₂O₃, Fe₂O₃ and CaO. However, the content of each oxide can vary significantly depending on the origin of the coal. Fly ash is partially crystalline, but has some reactivity, mainly due to the presence of calcium in its composition. Materials synthesized from these precursors are often categorized as alkaline-activated materials.

In an embodiment of the invention, rice husk ash from burning rice husk is used in energy production. This material is basically made up of SiO₂, and contains only small amounts of other oxides, such as Al₂O₃ and K₂O. Although it is not reactive, rice husk ash is an additional source of silicon that can be added in conjunction with other solid precursors.

In an embodiment of the invention, alkaline activators are used, such as sodium silicate (Na₂SiO₃), potassium silicate (K₂SiO₃), lithium silicate (Li₂SiO₃), cesium silicate (Cs₂SiO₃), as a solution. These activators can be found in different molar ratios SiO₂/Na₂O or SiO₂/K₂O and different solid concentrations. Sodium hydroxide (NaOH) or potassium hydroxide (KOH) solutions are also activators frequently used. In some applications, a solution is prepared combining both activators, silicate and hydroxide, the ratio of which will depend on the degree of reactivity required.

Inorganic polymers stand out for their good mechanical performance, chemical resistance, heat and fire resistance, and can be used as an inorganic matrix for the development of composites aimed at a wide variety of applications. However, because they resemble ceramic materials, they are fragile materials, limiting their mechanical performance. In the present invention, reinforcement elements are incorporated in order to improve mechanical performance in a controlled manner. In this context, in the present invention other types of raw materials are added with the purpose of obtaining special properties for specific applications, such as reinforcing fibers.

It is also an object of the invention to provide a process for manufacturing tools and molds that is fast, low-cost, high-quality and reduces energy and raw material consumption, making industrial production by forming structural composite materials technically and economically feasible and environmentally beneficial.

In the process of the invention, when the alkaline solution comes into contact with the solid precursor particles, dissolution and partial solubilization of the metal ions and oxides present in the microstructure occur. Upon reaching a certain concentration, these ions and oxides begin to rearrange and form new structures, together with the Na⁺ and K⁺ ions from the alkaline activating solution. As exothermic reactions progress, such structures grow and form three-dimensional structures, until they occupy the entire volume of the mixture. The solidified material is composed of partially dissolved solid particles, surrounded by a predominantly amorphous structure and some points located with short-range order. Part of the water present in the alkaline activating solution evaporates, but part remains present as structural water, chemically bound in the three-dimensional micro-structure.

In the process of the invention, most compositions of these inorganic polymers can be cured at room temperature. However, when it is desired to accelerate the curing and solidification process, or to achieve a particular characteristic, heat treatments can be performed under specific conditions.

The process of the invention has a relevant characteristic consisting of the fact that the mixtures described have the ability to be molded into the most varied geometries, from the simplest to the most complex, regardless of dimension.

In the present invention, molds and tools made of inorganic-cement composite material were developed. The invention process for obtaining molds and forming tools is much faster and more economical than its counterparts, for obtaining traditional tools made of steel by machining.

In one aspect, the process of the invention provides for the prior selection of the tool micro-structure in accordance with specific engineering requirements for special applications. Thus, by selecting different ratios of the solid precursors materials, reinforcing fibers and additive materials, the present invention provides different properties useful for different tool applications.

In a first object, the present invention presents an inorganic composite for mechanical forming tools and molds that comprises a combination of a cement matrix with a reinforcing fiber.

In an embodiment, the cement matrix of the composite of the present invention results from the combination of at least one solid precursor with at least one alkaline activating solution.

In an embodiment, said cement matrix comprises between 20 and 50% by volume of solid precursor containing silicates and between 50 and 80% by volume of alkaline activating solution.

In an embodiment, the composite further comprises an aggregate material. The aggregate material in the context of the present invention can be understood as a material capable of contributing to the dimensional stability of the composite, creating an inert structure. The aggregate material creates islands of stability, reducing shrinkage and preventing deformation of the composite. Avoiding deformation can be seen as one of the main functions of the aggregate material, which also contributes as particulate reinforcement and improves the fluidity/workability of the mixture. Consequently, the aggregate material also contributes to better molding, packaging, densification of the material and reduction of porosity.

In an embodiment, said aggregate material is selected from quartz, refractory or other inert materials. Non-limiting examples of such materials include silico-aluminous materials, bauxite spheres, metal slag, brick waste, tile waste, sanitary ware waste, ceramic waste, sand in general, or combinations thereof.

In an embodiment, said quartz is fine or coarse. In an embodiment, said refractory is fine, medium or coarse.

In a non-limiting embodiment, fine quartz can be understood as a quartz material with an average particle size of 35 µm.

In a non-limiting embodiment, coarse quartz can be understood as a quartz material with an average particle size of 1.4 mm.

In an embodiment, fine refractory can be understood as a refractory material with an average particle size < 0.1 mm.

In an embodiment, medium refractory can be understood as a refractory material with an average particle size from 0.1 mm - 0.5 mm.

In an embodiment, coarse refractory can be understood as a refractory material with an average particle size from 0.5 mm - 2 mm.

In an embodiment, the composite comprises between 75 and 95% by volume of the cement matrix, between 5 and 25% by volume of the reinforcing fiber and between 0 and 20% by volume of the aggregate material.

In an embodiment, the composite comprises between 80 and 95% by volume of the cement matrix. In an embodiment, the composite comprises between 85 and 95% by volume of the cement matrix.

In an embodiment, the composite comprises between 5 and 20% by volume of the reinforcing fiber. In an embodiment, the composite comprises between 5 and 15% by volume of the reinforcing fiber.

In an embodiment, the composite comprises between 0 and 15% by volume of the aggregate material. In an embodiment, the composite comprises between 1 and 10% by volume of aggregate material.

In an embodiment, the composite additionally comprises a nanofiller. The addition of nanofiller aims to confer specific/special properties or characteristics to the final composite, depending on the desired application. Any type of nanofiller may be suitable. Non-limiting examples of nanofiller that can be cited are oxides in general (e.g., Nb₂O₅, NbO₂, NbO, TiO₂, Al₂O₃, MgO, CaO, ZrO₂, SiO₂, or combinations thereof), as well as nitrides (e.g., BM, Mg₃N₂, Ca₃N₂, Li₃N, or combinations thereof), and carbides (SiC, B₄C).

In a non-limiting embodiment, the nanofiller is composed of niobium nanoparticles, titanium nanoparticles, or combinations thereof. In a non-limiting embodiment, said niobium nanoparticle is niobium pentoxide nanoparticle. In a non-limiting embodiment, said titanium nanoparticle is titanium dioxide nanoparticle.

In an embodiment, the composite comprises between 0.001 and 1 % by volume of nanofiller. In an embodiment, the composite comprises between 0.001 and 0.5% by volume of nanofiller. In an embodiment, the composite comprises between 0.001 and 0.32% by volume of nanofiller.

In a second object, the present invention discloses a mechanical forming tool of inorganic composite material.

In an embodiment, the inorganic composite material of the tool comprises a combination of at least one cement matrix with at least one reinforcing fiber. In an embodiment, the cement matrix is a result of the combination of at least one solid precursor with at least one alkaline activating solution.

In an embodiment, the tool of the present invention is reworked and reused to produce new tools in other applications.

In a third object, the present invention discloses an injection and/or stamping and/or casting mold of inorganic composite material.

In an embodiment, the inorganic composite mold material comprises a combination of at least one cement matrix with at least one reinforcing fiber. In an embodiment, the cement matrix is a result of the combination of at least one solid precursor with at least one alkaline activating solution.

In an embodiment, the inorganic composite mold material of the present invention comprises high hardness and wear resistance, being excellent for mechanical forming processes. Such properties are achieved through the combination of materials and appropriate proportions of solid precursors, reinforcing fibers and, alternatively, additive materials.

In an embodiment, the inorganic composite material of the mold of the present invention comprises a fragile characteristic and is resistant to high temperature, maintaining the dimensional stability of the part, being excellent for casting processes, being easily destroyed after the hardening of the material of the part produced. Such properties are achieved by adjusting the material combination and appropriate proportions of solid precursors, reinforcing fibers and, alternatively, additive materials.

In an embodiment, although raw materials similar to other mold and tool applications may be used, adjusting the ingredients proportions provides different mechanical properties. In this context, given the adjustment of mechanical properties resulting from the adjustment of ingredient proportions, the mold obtained is optionally reworked and reused to produce new molds in other applications.

In a fourth object, the present invention presents a process for manufacturing a mechanical forming tool and/or mold that comprises at least one step of manufacturing a cement matrix through the addition of at least one alkaline activating solution to at least one mixture of at least one solid precursor.

In an embodiment, the process of the present invention comprises a step of adding at least one reinforcing fiber to the cement matrix. In an embodiment, the process of the present invention comprises a step of adding an additive material in addition to the reinforcing fiber and the cement matrix, of which additive material promotes changes to the mechanical properties of the final mold/tool, that can be changed as desired to the final product.

In an embodiment, the process of the present invention comprises a step of homogenizing the mixture and adding the homogenized mixture into a pre-mold with the desired tool or mold geometry.

In an embodiment, the process of the present invention comprises a step of supplying heat and curing the mixture, acquiring the final geometry of the part.

In a fifth object, the present invention presents the use of an inorganic composite comprising at least one combination of at least one cement matrix with at least one reinforcing fiber, for the manufacturing of at least one of: a mechanical forming tool; an injection mold; a stamping mold; and/or a casting mold.

The present invention provides for the non-use of steel, that is, the replacement of steel with other more available and/or cheaper materials, in addition to consuming less energy in the chain and providing viability of shapes, constituting a great technological and engineering advancement with composite materials, making molds and tools feasible quickly, intelligently and cheaply.

In an embodiment, the context and requirements for obtaining a bulk carrier lid measuring 3m long by 1m wide, and 3mm thick are exemplified. It is important to highlight that the cost of the respective conventional metal mold can vary from around 2.5 to 3 million Brazilian Reais and any error or failure in the production of the part or mold causes immense losses to the industry. Thus, the high cost of producing conventional metal tools makes it difficult or unfeasible for a series of technologies aimed at using parts with polymers and composites, as the conventional metal mold needs a temperature maintenance property (slow dissipation), and the steel does this very well, but has its high cost and adjustment limitations. In the present invention, in broad contrast, the forming of thermoplastic structural composite materials are performed with an innovative tool, an inorganic cement material of low weight, low cost and dimensional flexibility, which can optionally be reworked.

In an embodiment, the mold or tool of the invention comprises an inorganic matrix with blast furnace slag precursor and additives to promote greater mechanical strength and heat resistance. The concentration and sources of such materials are adjusted depending on the desired final application. Thus, the process and obtaining provides the adjustment of the desired characteristics by adjusting the proportions of precursor, inorganic matrix and additives. The products of the present invention have varying degrees of resistance to compression, heat and heat transfer, according to the need and the specific composition. All this takes place at an extremely low production cost compared to steel, and is optionally made with slag.

In an embodiment, the surface of the mold/tool of the invention is additionally covered with other materials to provide an improved degree of finish.

Another fundamental technical characteristic of the present invention is to make it technically and economically viable to obtain molds or tools with complex geometries, much more complex than ones obtained by machining. Unlike machined molds, the mold or tool of the invention is made by "additive manufacturing" (near net shape), not requiring the removal of material. In the invention process, the molds/tools already leave the counter-mold in their final or almost final shape. This eliminates many steps in the process, helping to reduce costs.

In the present invention, the counter-mold is also made of a very simple and cheap material, with an inorganic matrix being used to fill the geometries, which allows the obtaining of extremely complex geometries, with straight corners and/or rounded corners, with varying results depending on the desired end goal.

In brief, the present invention provides, among others, the following technical advantages: 1. Ergonomic and energetic advantages in use, due to the fact that the mold has an extremely low specific weight compared to metal ones; 2. Flexibility in specific model/tool design for each application, that is, each mold can be designed and designed not only in its geometry, but also in the properties it must have to fulfill the functions it is intended to perform; 3. Capacity for reprocessing, reuse, rework; and 4. Ease of access, as it uses precursors that are available and not scarce in the environment; 5. Use of varied, reused, low-cost precursor materials; 6. Energy savings in obtaining the mold and in production logistics due to the low weight and elimination of steel (with its weight and energy required in manufacturing, transport and machining).

This versatility in the selection of the mechanical properties of the mold and the addition of reinforcements suitable for its best use bring solutions to problems in the construction of molds and tools.

The examples shown herein are intended only to exemplify one of the countless ways of carrying out the invention, however without limiting its scope.

### Example 1 - Inorganic Composite and Performance Tests

In the present example, the composition of the invention was embodied in two different forms, formulation 1 and formulation 2, as shown in Tables 1 and 2 below:

**Table 1 - Composition of formulation 1**

| **Raw material** | **(vol%)** |
|---|---|
| Blast furnace slag | 27.52 |
| Rice husk ash | 4.48 |
| Sodium silicate | 40.00 |
| Water | 18.00 |
| Rock wool | 5.00 |
| Glass fiber | 2.00 |
| Steel fiber | 3.00 |

**Table 2 - Composition of formulation 2**

| **Raw material** | **(vol%)** |
|---|---|
| Blast furnace slag | 27.24 |
| Rice husk ash | 4.44 |
| Sodium silicate | 40.00 |
| Water | 18.00 |
| Nanofiller | 0.32 |
| Rock wool | 5.00 |
| Glass fiber | 2.00 |
| Steel fiber | 3.00 |

The mixing process was the same for all cases of this embodiment, and comprised: a first step of mixing and homogenization, for 5 minutes, of blast furnace slag, rice husk ash, rock wool, steel fiber and nanofiller (when in the case of formulation 2); a second step of mixing and homogenization, for 10 minutes, of sodium silicate and water added to the mixture obtained in the previous step; and a third step of mixing and homogenization, for 3 minutes, of glass fiber added to the mixture obtained in the previous step.

After obtaining the mixtures as indicated above, different heat treatments were applied to obtain four prototypes, as follows: Prototype 1 was made with formulation 1, through heat treatment at 60°C for 48h; Prototype 2 was made with formulation 2 and heat treatment at 60°C; Prototype 3 was made with formulation 1, through a first heat treatment at 60°C for 48h and a subsequent heat treatment at 800°C; Prototype 4 was made with Formulation 2, with a heat treatment at 60°C and another at 800°C.

Several tests were conducted with the prototypes described above. Table 3 summarizes the qualitative results obtained.

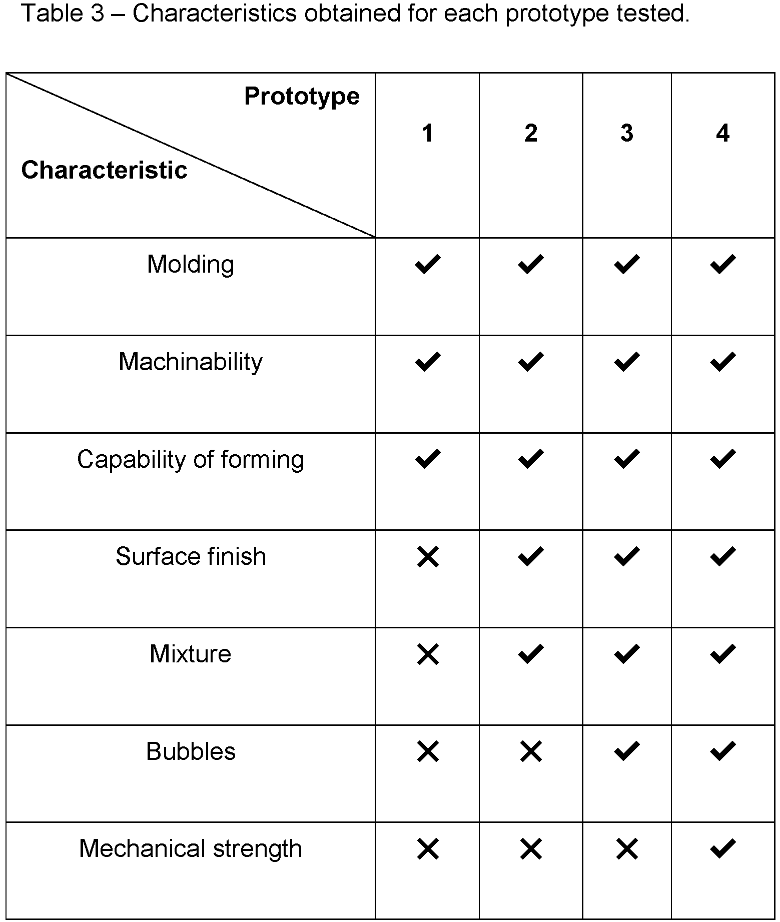

Some quantitative tests were carried out to evaluate the performance of the prototypes under varying mechanical efforts. Fig. 1 shows the performance results of mechanical strength tests of molds prepared under different conditions. In A, the compressive strength results in MPa are shown; in B, the bending strength results in MPa are shown; in C, the shear strength results in MPa are shown; in D, the compressive strain results in % are shown; in E, the bending strain results in % are shown; in F, the shear strain results in % are shown. The bars numbered as 1 show the results obtained for prototype 1 and the bars numbered as 3 show the results obtained for prototype 3.

**Table 4 - maximum values obtained for each variable for two tested prototypes**

| **Sample** | **Compression** | | | **Bending** | | | **Shear** | | |
|---|---|---|---|---|---|---|---|---|---|
| | **σ (MPa)** | **ε (%)** | **E (GPa)** | **σ (MPa)** | **ε (%)** | **E (GPa)** | **σ (MPa)** | **ε (%)** | **E (GPa)** |
| **Prototype 1** | 57.66 | 2.45 | 2.98 | 4.42 | 1.13 | 4.38 | 13.92 | 2.27 | 1.04 |
| **Prototype 3** | 133.86 | 3.47 | 4.56 | 13.80 | 1.95 | 9.00 | 19.36 | 2.57 | 1.06 |

Fig. 2 shows three graphs with compressive, bending, and shear stress data, respectively, of molds prepared under different conditions. In A, the compressive stress results in MPa are shown on the ordinate and the % strain is shown on the abscissa; in B, the bending stress results in MPa are shown on the ordinate and the % strain is shown on the abscissa; in C, the shear stress results in MPa are shown on the ordinate and the % strain is shown on the abscissa. The curves numbered as 1 are from the results obtained for prototype 1 and the curves numbered as 3 are from the results obtained for prototype 3.

### Example 2 - Use in Manufacturing of Mold and Tool

The composite of the invention is particularly useful for the manufacture of molds and tools, including a mold and/or tool for mechanical forming of composite materials, a mold and/or tool for mechanical forming of metals, a mold for casting, and a mold for injection.

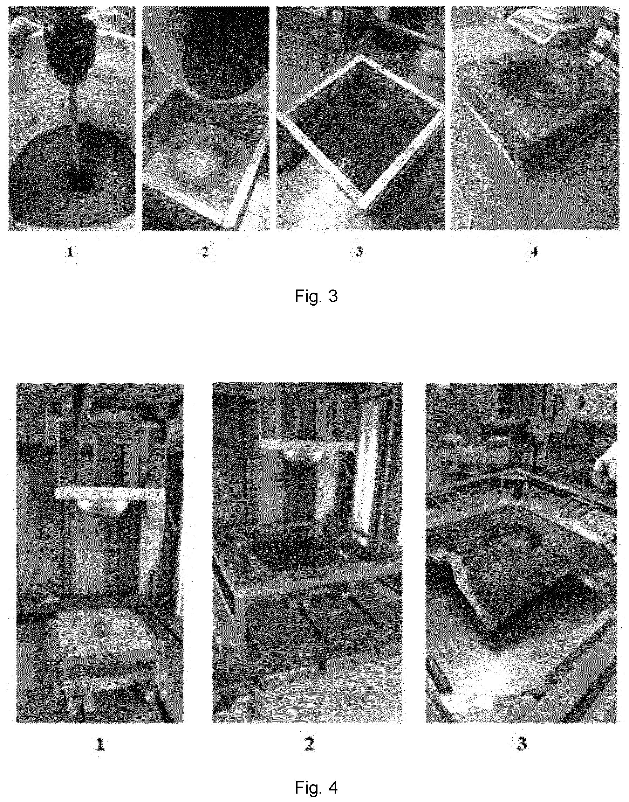

In this embodiment, the ways of obtaining molds and tools are exemplified, which is very contrasting with the ways of obtaining conventional molds and tools made from steel or other metals. The composition of the invention, as exemplified in example 1, was used in the preparation of molds and tools, as illustrated in Figs. 3-6.

Fig. 3 shows photos depicting the process for preparing a mold for mechanical forming of metal sheets or polymer composites. In 1, the step of mixing and homogenizing the components is shown, with a total time of 45 minutes; in 2, the molding step is shown, in this case made in a square box with a counter mold at the bottom; in 3, the step of placing the fresh composition of the invention is shown, being subsequently cured for 48h at 60°C; in 4, the mold obtained with the concavity for forming metal sheets or polymer composites is shown.

Fig. 4 shows photos of the mold assembly in a press (1), followed by forming (2) a polymeric tape on the mold; and the tape obtained after the mechanical forming (3).

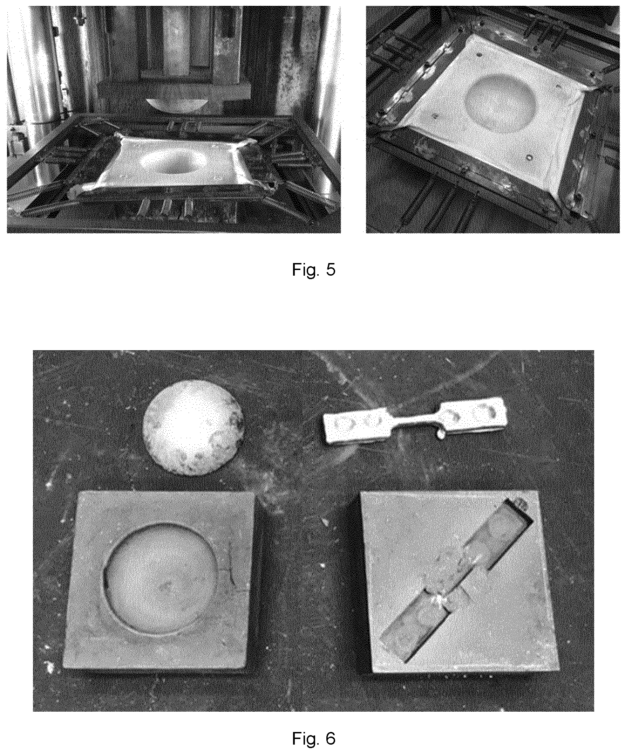

Fig. 5 shows two photos: on the left, the forming of a metal sheet on the mold in a press; on the right, a more detailed view of the cavity formed with adequate conformation to the curve of the mold.

Fig. 6 shows a photo of two casting molds. On the left and below, a mold with a circular cavity is shown; and on the left and above, the metal part obtained by placing the molten metal in said mold is shown. On the right and below, a mold with two rectangular cavities joined by a narrower channel is shown; and on the right and above, the metal part obtained by placing the molten metal in said mold is shown.

### Example 3 - Male-Female Mold Type Stamping Tool in Inorganic Composite Material

In this embodiment, an inorganic composite of a cement nature and its use in the manufacture of a casting mold for a complex tool were developed. The matrix of this composite was an cement matrix activated alkalinely, with granulated blast furnace slag as the main solid precursor, and rice husk ash as an additional source of silicon. The alkaline activator used was a sodium silicate solution. Mechanical reinforcement fibers such as glass fiber, steel fiber and rock wool were also added.

The alkaline activated cement matrix was developed using blast furnace slag and rice husk ash as solid precursors. The alkaline activator of this matrix was a sodium silicate solution.

Table 5 shows the chemical composition of the solid precursors used for the cement matrix of this embodiment.

**Table 5: Chemical composition of solid precursors in the cement matrix.**

| **Oxide contents** | **Blast furnace slag** | **Rice husk ash** |
|---|---|---|
| SiO₂ (%) | 35.1 | 88.5 |
| CaO (%) | 22.9 | 0.4 |
| Al₂O₃ (%) | 25.7 | 3.2 |
| MgO (%) | 13.4 | 0.2 |
| KO (%) | 1.4 | 6.5 |
| MnO (%) | 0.5 | 0.6 |
| Fe₂O₃ (%) | 0.3 | 0.15 |
| TiO₂ (%) | 0.3 | 0.15 |
| SrO (%) | 0.2 | 0.15 |
| SO₃ (%) | 0.2 | 0.15 |
| total | 100 | 100 |

The other chemical and physical properties are presented in Table 6.

**Table 6: Chemical and physical properties of solid precursors in the cement matrix**

| **Property** | **Blast furnace slag** | **Rice husk ash** |
|---|---|---|
| pH | 10.9 | 10.7 |
| Specific mass (g/cm³) | 2.82 | 1.84 |
| Apparent density (g/cm³) | 0.83 | 0.52 |
| Specific surface area (m²/g) | 2.33 | 13.99 |
| d₁₀ (µm) | 3.1 | 3.7 |
| d₅₀ (µm) | 17.4 | 18.7 |
| d₉₀ (µm) | 35.9 | 57.9 |

The chemical and physical properties of the alkaline cement matrix activator are presented in Table 7.

**Table 7: Chemical and physical properties of the alkaline cement matrix activator.**

| **Property** | **Sodium silicate** |
|---|---|
| pH | 12.10 |
| Contents of SiO₂ (%) | 33.00 |
| Contents of Na₂O (%) | 14.90 |
| Contents of H₂O (%) | 32.10 |
| SiO₂/Na₂O | 2.21 |
| Specific mass (g/cm³) | 1.48 |
| Viscosity (cP) | 149 |

For the development of the alkaline-activated inorganic cement composite, glass fiber, steel fiber and rock wool were added as reinforcing fibers to the matrix. The physical and chemical properties of the reinforcing elements used in the composite are presented in Table 8.

**Table 8: Ratios and physical and chemical properties of the composite reinforcement elements.**

| **Contents** | **Rock wool** | **Glass fiber** | **Steel fiber** |
|---|---|---|---|
| SiO₂ (%) | 37.95 | 51.1 | - |
| Al₂O₃ (%) | 16.45 | 12.5 | - |
| CaO (%) | 25.05 | 33.4 | - |
| Fe₂O₃ (%) | 6.85 | - | - |
| MgO (%) | 9.55 | 2.10 | - |
| K₂O (%) | 4.1 | - | - |
| Fe (%) | - | - | 98.7 |

| **Property** | **Rock wool** | **Glass fiber** | **Steel fiber** |
|---|---|---|---|
| Specific mass (g/cm³) | 2.65 | 2.60 | 7.54 |
| Apparent density (g/cm³) | 0.26 | 0.46 | 0.75 |
| Length (mm) | 0.04 | 4.11 | - |
| Beam width (mm) | - | 0.73 | 1.5 |
| Diameter (µm) | 7 | 15 | 10 |
| Mesh retention 1.680 mm (%) | 0.85 | - | - |
| Mesh retention 0.700 mm (%) | 12.15 | - | - |
| Mesh retention 0.420 mm (%) | - | - | 3.2 |
| Mesh retention 0.300 mm (%) | 2.0 | - | - |
| Mesh retention 0.250 mm (%) | - | - | 12.0 |
| Mesh retention 0.150 mm (%) | 3.4 | - | 11.0 |
| Mesh retention 0.075 mm (%) | - | - | 22.0 |
| Waste < 0.075 mm (%) | 81.6 | - | 51.8 |

In this embodiment, the cement matrix developed for the composite is composed of 42 vol % of solid precursors and 58%vol of alkaline activating solution. From solid precursors, 86 vol % corresponds to blast furnace slag, which is the main precursor, while the remaining 14 vol % corresponds to rice husk ash, which is the additional source of silicon. The alkaline activating solution is composed of vol 69% of sodium silicate and 31 vol % of water. The composition of the cement matrix of this embodiment of the invention is shown in Table 9.

**Table 9: Composition of the cement matrix formulation.**

| **Matrix** | **Raw material** | **(vol%)** |
|---|---|---|
| Solid precursors | Blast furnace slag | 27.52 |
| | Rice husk ash | 4.48 |
| Alkaline activating solution | Sodium silicate | 40.00 |
| | Water | 18.00 |

This matrix has an initial viscosity of 7000 cP and a working time of up to 4 hours under room temperature conditions (25°C). After curing at 60°C for 24 hours, under sealed conditions, thus controlling the evaporation of solvents from the alkaline solution, the solidified matrix has a compressive strength of 83 MPa, bending strength of 7 MPa and shear strength of 23 MPa.

The developed composite has 90 vol % of cement matrix and 10 vol % of reinforcement elements, 5 vol % of rock wool, 2 vol % of glass fiber and 3 vol % of steel fiber. The 10 vol % corresponding to the added reinforcing elements were subtracted from the solid precursors with the aim of maintaining the same ratio between total solids (solid precursors and fibers) and liquids (alkaline activating solution), and thus maintaining the workability of the mixture. Therefore, in the final composite, of the 90 vol % represented by the matrix, 32 vol % correspond to solid precursors (blast furnace slag and rice husk ash) and 58 vol % correspond to the alkaline activating solution. The composition of the composite formulation of this embodiment is described in Table 10.

**Table 10: Composite formulation composition.**

| **Composite** | **Raw material** | **(vol%)** |
|---|---|---|
| Matrix | Blast furnace slag | 27.52 |
| | Rice husk ash | 4.48 |
| | Sodium silicate | 40.00 |
| | Water | 18.00 |
| Reinforcement | Rock wool | 5.00 |
| | Glass fiber | 2.00 |
| | Steel fiber | 3.00 |
| | Total | 100.00 |

### Example 4 - Process for Manufacturing a Male-Female Mold-Type Injection Mold

In this embodiment of the invention, a composite as described in example 3 above was mixed in an intensive laboratory mixer. The speed of the tank and stirrer was always kept at low speed (950 rpm) and the total mixing time was 13 minutes.

In a first step, the mixing and homogenization of the solid raw materials (blast furnace slag, rice husk ash, rock wool and steel fiber) were carried out for 5 minutes.

In a second step, the alkaline activating solution was added and the mixture was homogenized for 5 minutes.

In a third step, glass fiber was added, followed by homogenization for another 3 minutes. At the end of the process, the mixture reached 36°C.

Then, the material obtained was immediately poured into the mold with the desired geometry, with vibration being applied for about 2 minutes to eliminate air bubbles. A heat treatment was carried out at 60°C for 48 hours in a sealed condition.

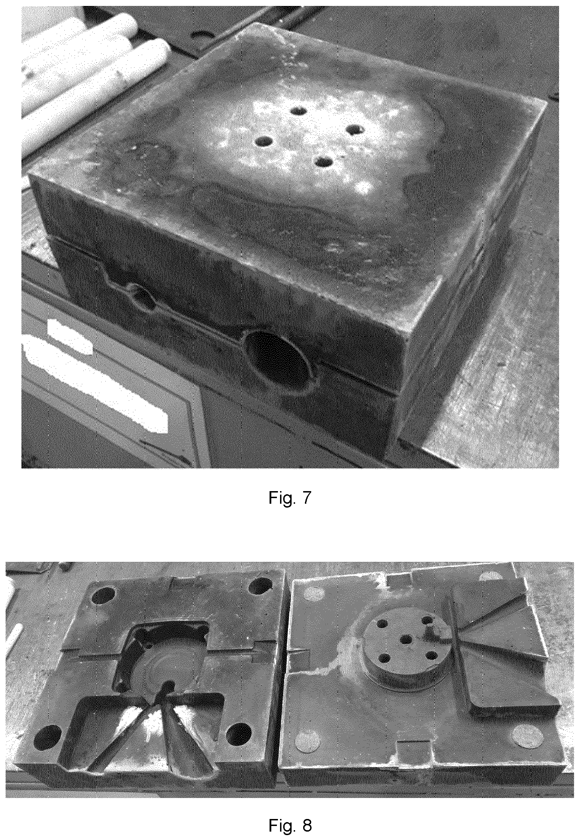

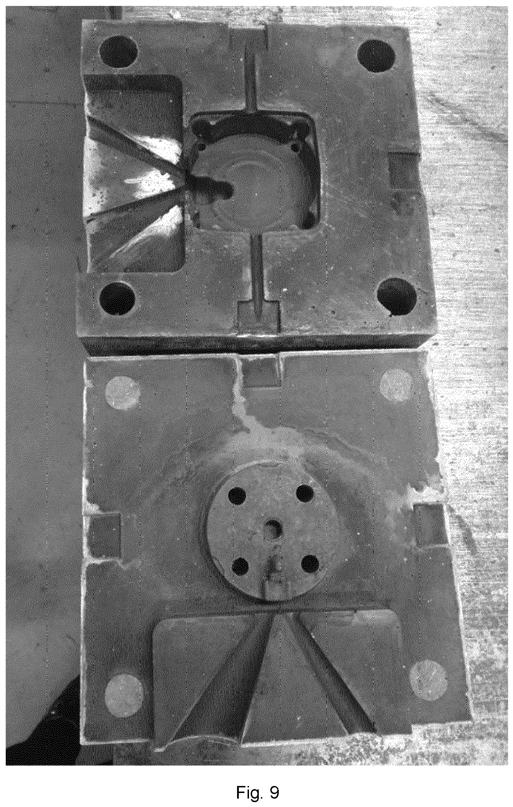

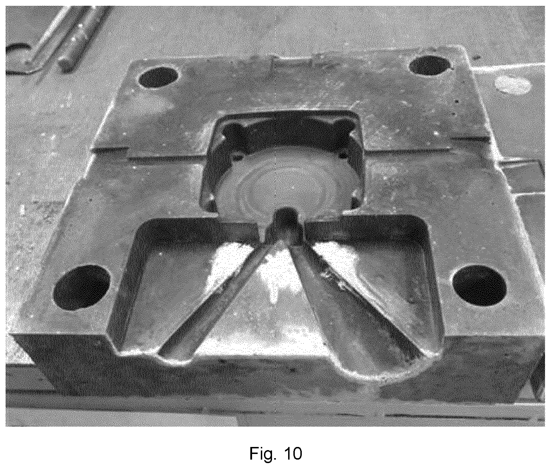

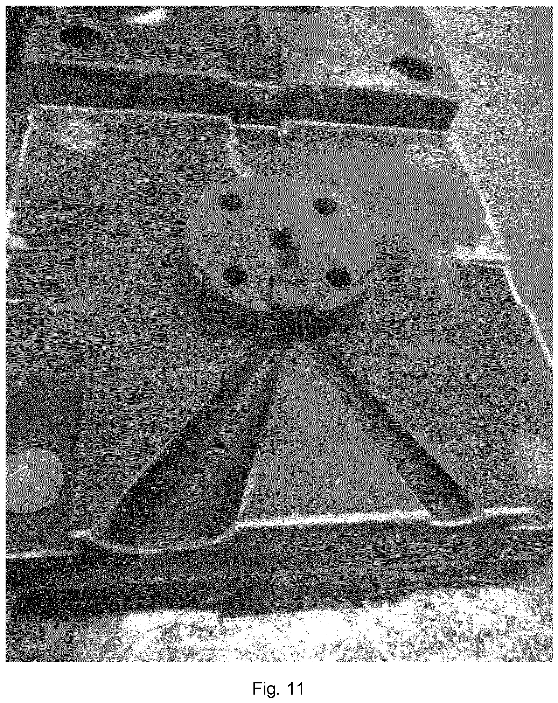

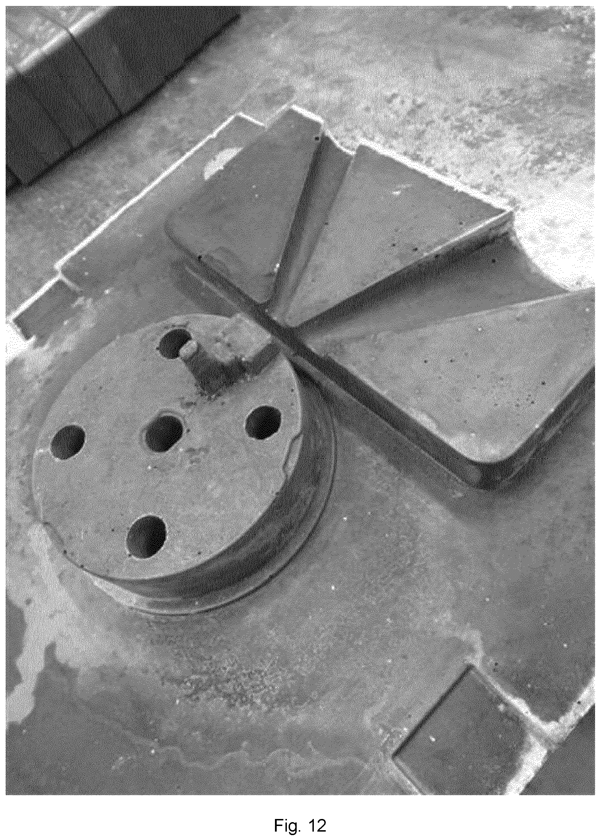

The male and female mold type stamping tool obtained is illustrated in Figs. 7-6, which show an aluminum injection mold for the production of a relay valve for a semitrailer, used in the pneumatic brake system. Fig. 7 shows an embodiment of a perspective view of the male-female mold of inorganic composite material of the present invention, in the closed position. Fig. 8 shows the mold of the embodiment of Fig. 7 in an open position, where the male mold appears next to the female mold. Fig. 9 shows another view of the mold of the embodiment of Fig. 7 in an open position, where the male mold appears next to the female mold. Fig. 10 shows an embodiment of the female mold illustrated in Figs. 7-9. Fig. 11 shows an embodiment of the male mold illustrated in Figs. 7-9. Fig. 12 shows another view of the male mold illustrated in Figs. 7-9.

### Example 5 - Inorganic Composites and Dilatometry Tests

In the present example, the composite of the invention was additionally embodied in twenty-one different forms, as shown in Tables 11 to 30 below.

The mixing process was similar for all cases of this embodiment, and comprised: a first step of mixing and homogenization, for 5 minutes, of blast furnace slag, rice husk ash (except in the sample in Table 13 below), rock wool, steel fiber and aggregate material (in the case of samples in Tables 14-19, 23-24, 27-30 below); a second step of mixing and homogenization, for 10 minutes, of sodium silicate (other non-limiting examples of activator can be potassium silicate, lithium silicate, cesium silicate or combinations thereof) and water together with the nanofiller (in the case of samples from Tables 20, 21, 25 and 26 below) added to the mixture obtained in the previous step; and a third step of mixing and homogenization, for 3 minutes, of glass fiber (or basalt fiber according to the sample in Table 12) added to the mixture obtained in the previous step.

After obtaining the mixtures as indicated above, heat treatment was applied to obtain prototypes of each composite, as follows: heat treatment at 60°C for 48h.

Table 11 shows more detailed information about the composition of formulation 1 as described in example 1 above.

**Table 11 - Formulation Composite 1 of Example 1 (called standard):**

| **Composite** | **Volume (%)** | **Raw material** | **Volume (%)** |
|---|---|---|---|
| *Matrix* | 90.00 | Blast furnace slag 35 µm | 27.52 |
| | | Rice husk silica | 4.48 |
| | | Sodium silicate | 40.00 |
| | | Distilled water | 18.00 |
| *Reinforcement* | 10.00 | Rock wool | 5.00 |
| | | Steel fiber | 3.00 |
| | | Glass fiber | 2.00 |
| | 100.00 | | 100.00 |

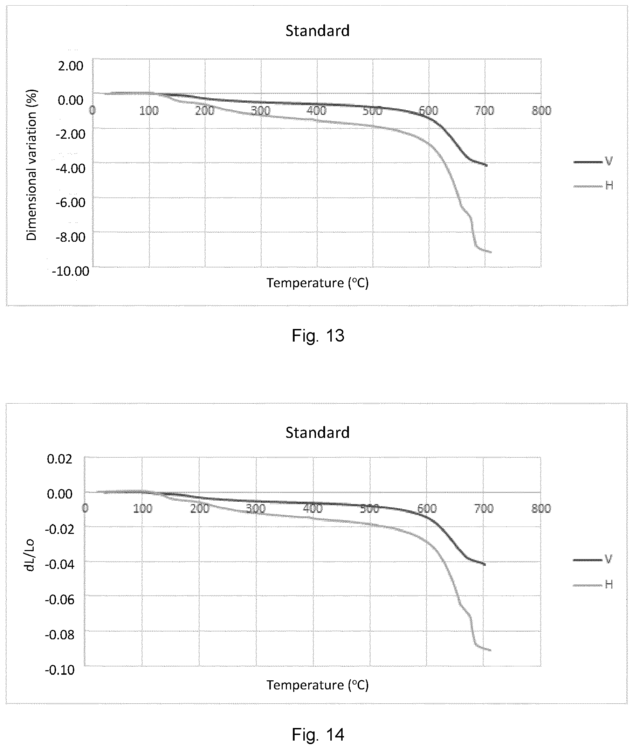

The composite as described in Table 11 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 13 depicts the dimensional variation (%) as a function of the sample temperature on the vertical and horizontal axes. Fig. 14 depicts the dimensions variation (dL/L₀) as a function of the sample temperature on the vertical and horizontal axes.

Based on this formulation, called standard, several modifications were made to the composition of the composites, as will be further illustrated in Tables 12 to 32 below.

**Table 12 - Composite Replacing Fiberglass with Basalt**

| **Composite** | **Volume (%)** | **Raw material** | **Volume (%)** |
|---|---|---|---|
| *Matrix* | 90.00 | Blast furnace slag 35 µm | 27.52 |
| | | Rice husk silica | 4.48 |
| | | Sodium silicate | 40.00 |
| | | Distilled water | 18.00 |
| *Reinforcement* | 10.00 | Rock wool | 5.00 |
| | | Steel fiber | 3.00 |
| | | Basalt fiber | 2.00 |
| | 100.00 | | 100.00 |

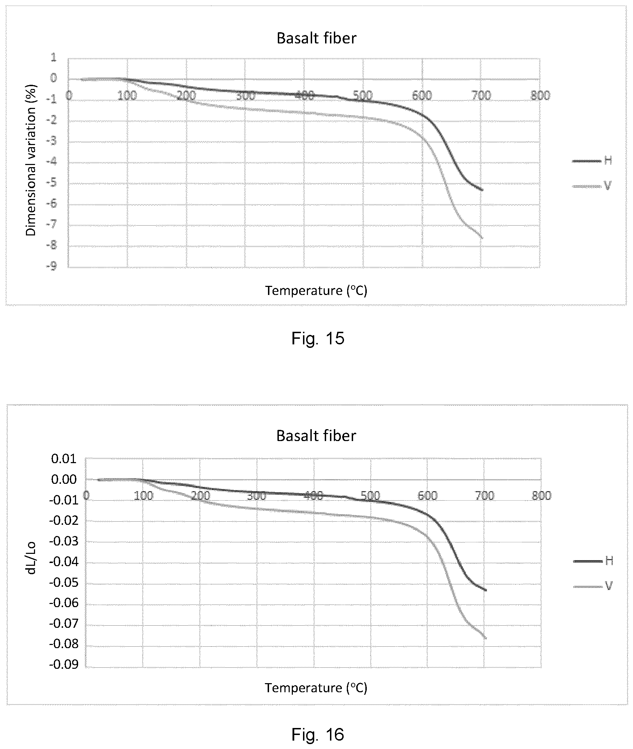

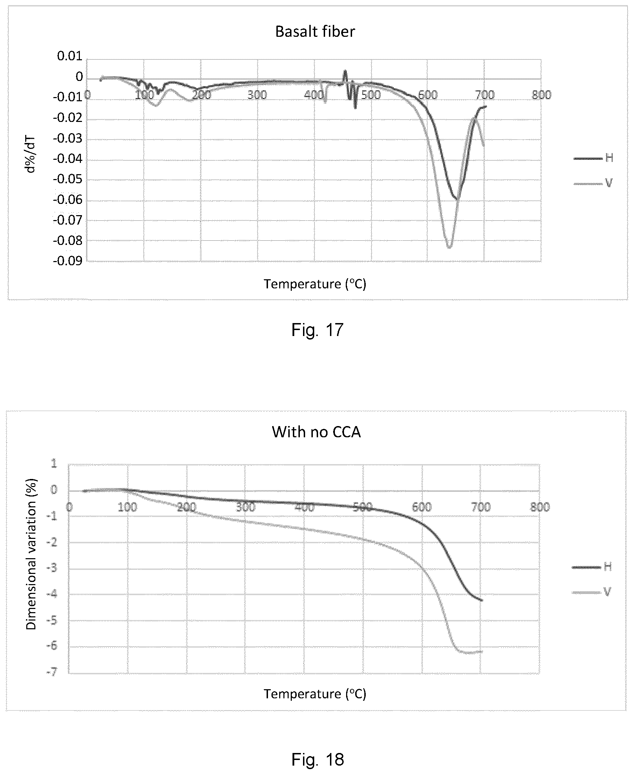

The composite as described in Table 12 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 15 depicts the dimensional variation (%) as a function of the sample temperature on the vertical and horizontal axes. Fig. 16 depicts the dimensions variation (dL/L₀) as a function of the sample temperature on the vertical and horizontal axes. Fig. 17 depicts the percentage of dL/L₀ variation as a function of the temperature variation.

**Table 13 - Rice Husk Ash-Free Composite**

| **Composite** | **Volume (%)** | **Raw material** | **Volume (%)** |
|---|---|---|---|
| *Matrix* | 90.00 | Blast furnace slag 35 µm | 32.00 |
| | | Sodium silicate PQ | 40.00 |
| | | Distilled water | 18.00 |
| *Reinforcement* | 10.00 | Rock wool | 5.00 |
| | | Steel fiber | 3.00 |
| | | Glass fiber | 2.00 |
| | 100.00 | | 100.00 |

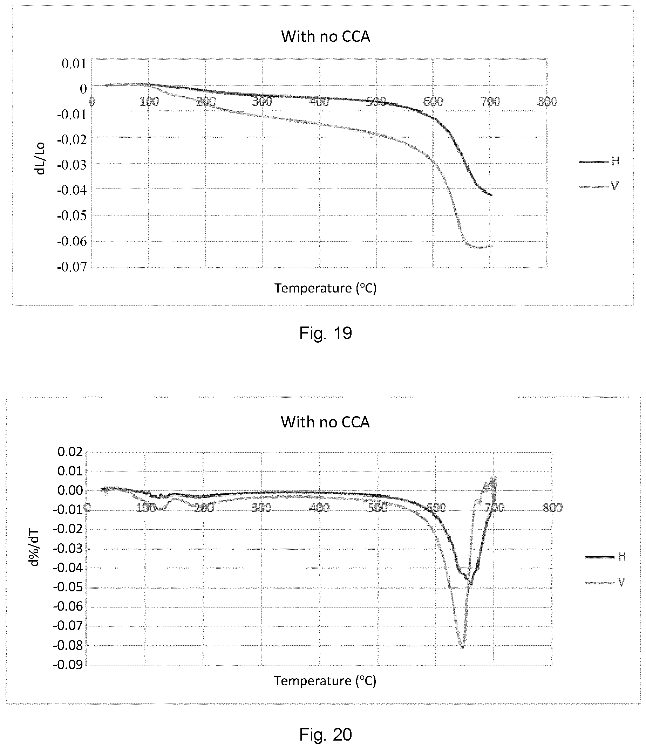

The composite as described in Table 13 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 18 depicts the dimensional variation (%) as a function of the sample temperature on the vertical and horizontal axes. Fig. 19 depicts the dimensions variation (dL/L₀) as a function of the sample temperature on the vertical and horizontal axes. Fig. 20 depicts the percentage of dL/L₀ variation as a function of the temperature variation.

**Table 14 - Composite with 2% Coarse Quartz as Aggregate Material**

| **Composite** | **Volume (%)** | **Raw material** | **Volume (%)** |
|---|---|---|---|
| *Matrix* | 88.00 | Blast furnace slag 35 µm | 26.91 |
| | | Rice husk silica | 4.38 |
| | | Sodium silicate | 39.11 |
| | | Distilled water | 17.60 |
| *Aggregate* | 2.00 | Coarse quartz | 2.00 |
| *Reinforcement* | 10.00 | Rock wool | 5.00 |
| | | Steel fiber | 3.00 |
| | | Glass fiber | 2.00 |
| | 100.00 | | 100.00 |

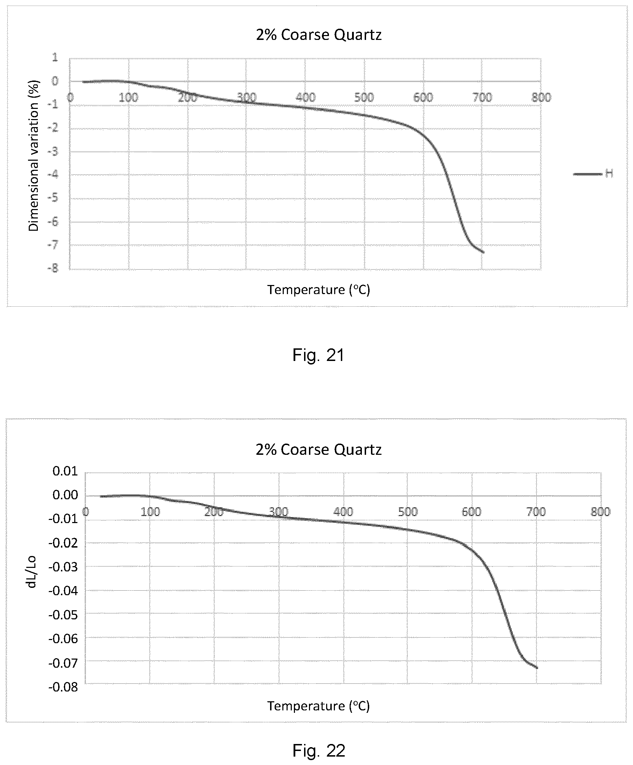

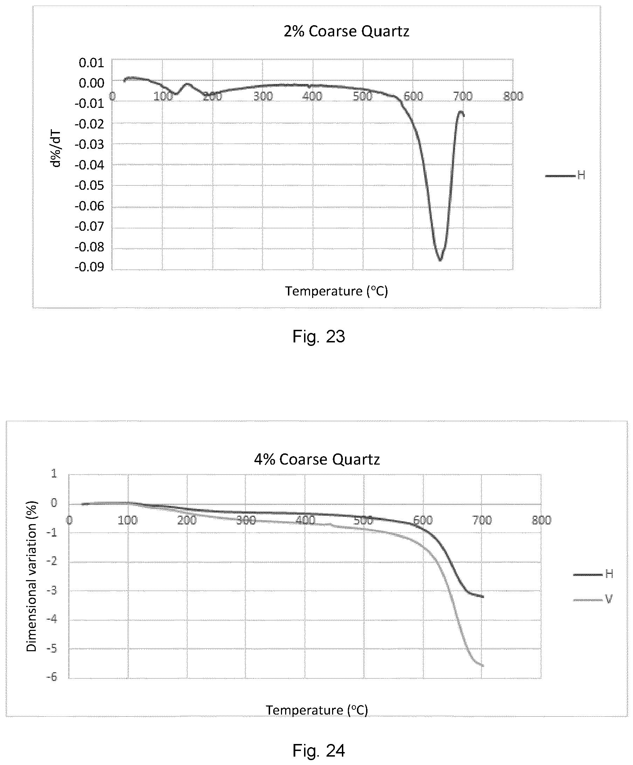

The composite as described in Table 14 was analyzed by horizontal dilatometry test in a Netzsch DIL 402 Espedis Classic dilatometer with a heating rate of 3°C/min in a synthetic air atmosphere and sample geometry of 8 x 8 x 25 mm. Fig. 21 depicts the dimensional variation (%) as a function of the sample temperature on the horizontal axis. Fig. 22 depicts the dimensions variation (dL/L₀) as a function of the sample temperature on the horizontal axis. Fig. 23 depicts the percentage of dL/L₀ variation as a function of the temperature variation.

**Table 15 - Composite with 4% Coarse Quartz as Aggregate Material**

| **Composite** | **Volume (%)** | **Raw material** | **Volume (%)** |
|---|---|---|---|
| *Matrix* | 86.00 | Blast furnace slag 35 µm | 26.30 |
| | | Rice husk silica | 4.28 |
| | | Sodium silicate | 38.22 |
| | | Distilled water | 17.20 |
| *Aggregate* | 4.00 | Coarse quartz | 4.00 |
| *Reinforcement* | 10.00 | Rock wool | 5.00 |
| | | Steel fiber | 3.00 |
| | | Glass fiber | 2.00 |
| | 100.00 | | 100.00 |

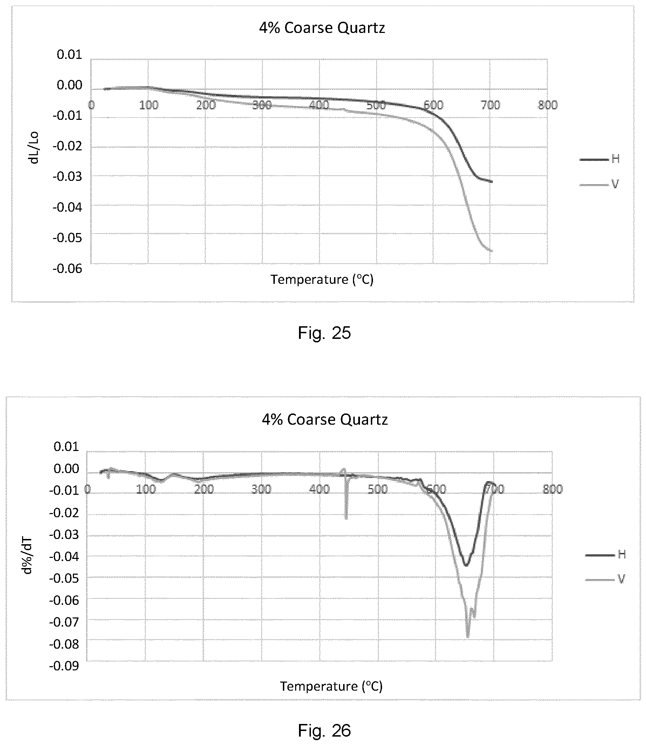

The composite as described in Table 15 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 24 depicts the dimensional variation (%) as a function of the sample temperature on the vertical and horizontal axes. Fig. 25 depicts the dimensions variation (dL/L₀) as a function of the sample temperature on the vertical and horizontal axes. Fig. 26 depicts the percentage of dL/L₀ variation as a function of the temperature variation.

**Table 16 - Composite Replacing 35 µm Slag with 45 µm Slag**

| **Composite** | **Volume (%)** | **Raw material** | **Volume (%)** |
|---|---|---|---|
| *Matrix* | 88.00 | Blast furnace slag 45 µm | 26.91 |
| | | Rice husk silica | 4.38 |
| | | Sodium silicate | 39.11 |
| | | Distilled water | 17.60 |
| *Aggregate* | 2.00 | Fine quartz | 2.00 |
| *Reinforcement* | 10.00 | Rock wool | 5.00 |
| | | Steel fiber | 3.00 |
| | | Glass fiber | 2.00 |
| | 100.00 | | 100.00 |

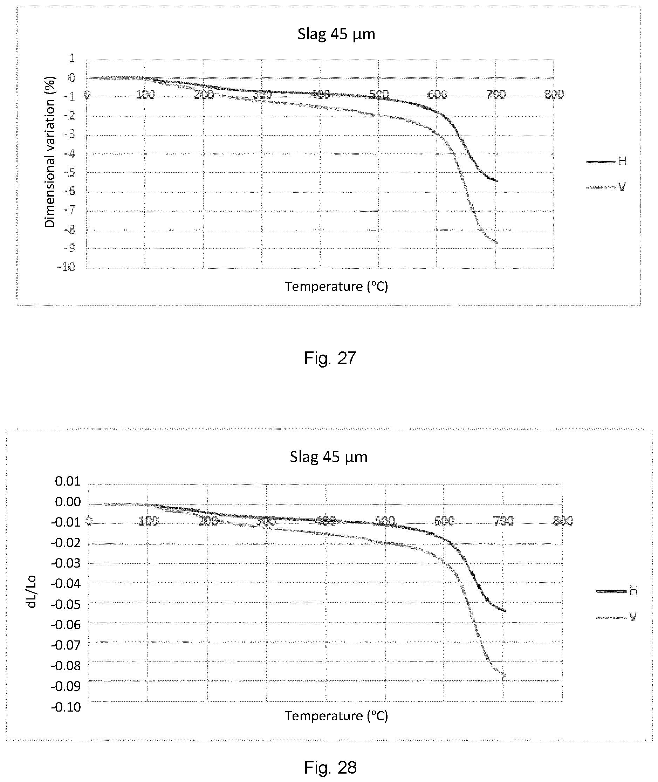

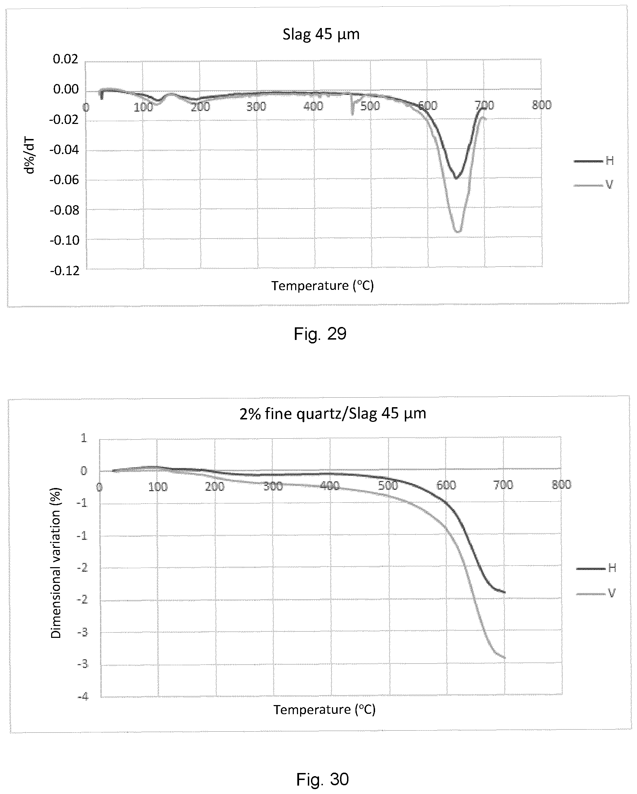

The composite as described in Table 16 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 27 depicts the dimensional variation (%) as a function of the sample temperature on the vertical and horizontal axes. Fig. 28 depicts the dimensions variation (dL/L₀) as a function of the sample temperature on the vertical and horizontal axes. Fig. 29 depicts the percentage of dL/L₀ variation as a function of the temperature variation.

**Table 17 - Composite with 45 µm Slag and 2% Fine Quartz as Aggregate Material**

| **Composite** | **Volume (%)** | **Raw material** | **Volume (%)** |
|---|---|---|---|
| *Matrix* | 88.00 | Blast furnace slag 45 µm | 26.91 |
| | | Rice husk silica | 4.38 |
| | | Sodium silicate | 39.11 |
| | | Distilled water | 17.60 |
| *Aggregate* | 2.00 | Fine quartz | 2.00 |
| *Reinforcement* | 10.00 | Rock wool | 5.00 |
| | | Steel fiber | 3.00 |
| | | Glass fiber | 2.00 |
| | 100.00 | | 100.00 |

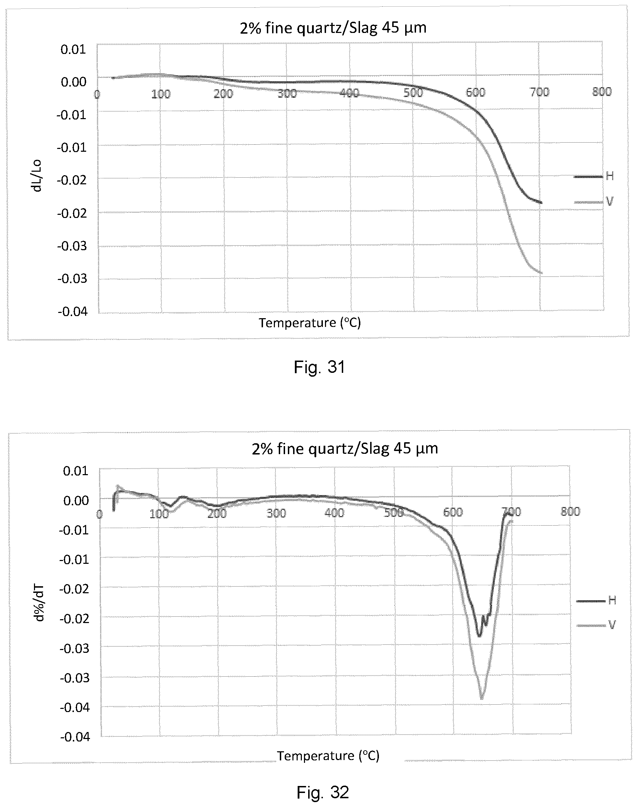

The composite as described in Table 17 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 30 depicts the dimensional variation (%) as a function of the sample temperature on the vertical and horizontal axes. Fig. 31 depicts the dimensions variation (dL/L₀) as a function of the sample temperature on the vertical and horizontal axes. Fig. 32 depicts the percentage of dL/L₀ variation as a function of the temperature variation.

**Table 18 - Composite with 35 µm Slag and 2% Fine Quartz as Aggregate Material**

| **Composite** | **Volume (%)** | **Raw material** | **Volume (%)** |
|---|---|---|---|
| *Matrix* | 88.00 | Blast furnace slag 35 µm | 26.91 |
| | | Rice husk silica | 4.38 |
| | | Sodium silicate | 39.11 |
| | | Distilled water | 17.60 |
| *Aggregate* | 2.00 | Fine quartz | 2.00 |
| *Reinforcement* | 10.00 | Rock wool | 5.00 |
| | | Steel fiber | 3.00 |
| | | Glass fiber | 2.00 |
| | 100.00 | | 100.00 |

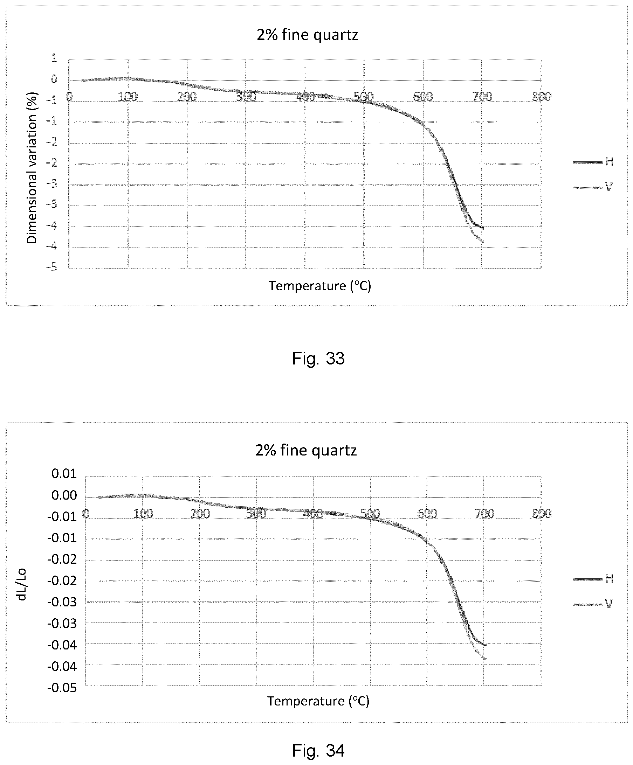

The composite as described in Table 18 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 33 depicts the dimensional variation (%) as a function of the sample temperature on the vertical and horizontal axes. Fig. 34 depicts the dimensions variation (dL/L₀) as a function of the sample temperature on the vertical and horizontal axes.

**Table 19 - Composite with 35 µm Slag and 4% Fine Quartz as Aggregate Material**

| **Composite** | **Volume (%)** | **Raw material** | **Volume (%)** |
|---|---|---|---|
| *Matrix* | 86.00 | Blast furnace slag 35 µm | 26.30 |
| | | Rice husk silica | 4.28 |
| | | Sodium silicate | 38.22 |
| | | Distilled water | 17.20 |
| *Aggregate* | 4.00 | Fine quartz | 4.00 |
| *Reinforcement* | 10.00 | Rock wool | 5.00 |
| | | Steel fiber | 3.00 |
| | | Glass fiber | 2.00 |
| | 100.00 | | 100.00 |

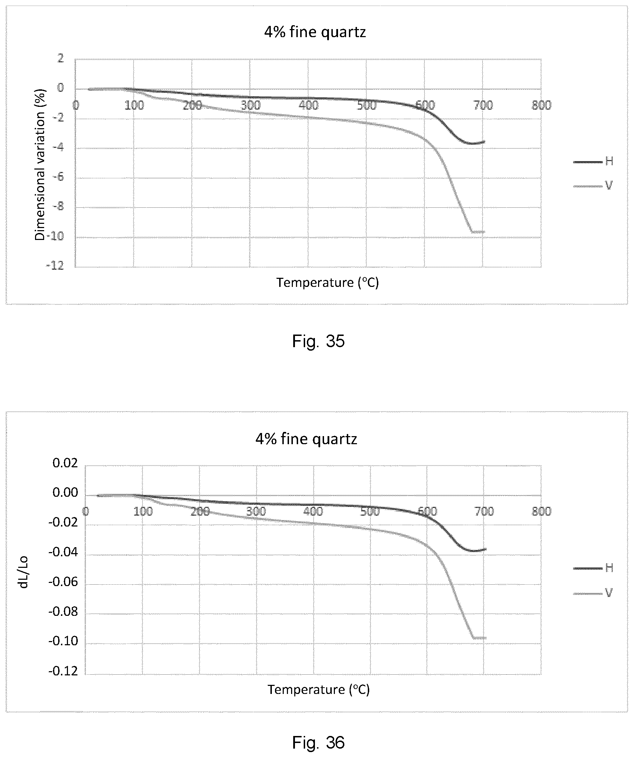

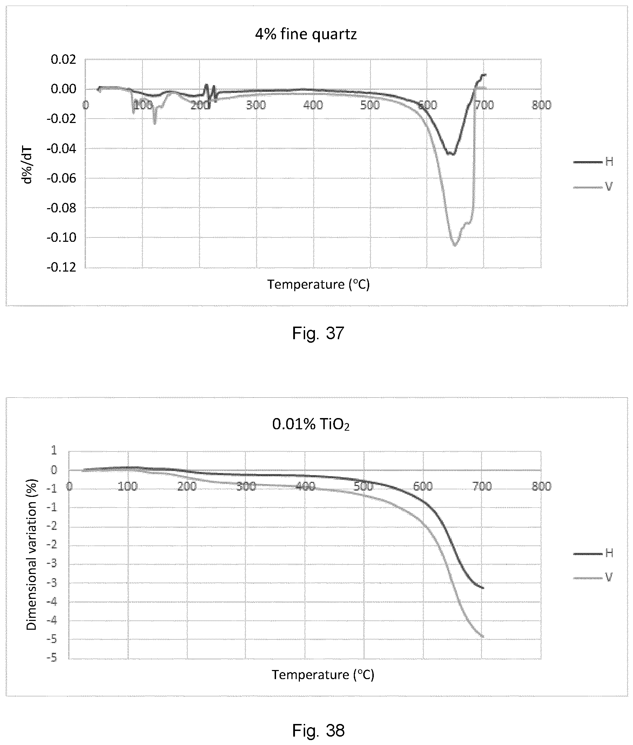

The composite as described in Table 19 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 35 depicts the dimensional variation (%) as a function of the sample temperature on the vertical and horizontal axes. Fig. 36 depicts the dimensions variation (dL/L₀) as a function of the sample temperature on the vertical and horizontal axes. Fig. 37 depicts the percentage of dL/L₀ variation as a function of the temperature variation.

**Table 20 - Composite with 0.01% (by volume) of TiO2 Nanoparticles**

| **Composite** | **Volume (%)** | **Raw material** | **Volume (%)** |
|---|---|---|---|
| *Matrix* | 90.00 | Blast furnace slag | 27.52 |
| | | Rice husk silica | 4.48 |
| | | Sodium silicate | 40.00 |
| | | Distilled water | 18.00 |
| *Reinforcem ent* | 10.00 | Rock wool | 5.00 |
| | | Steel fiber | 3.00 |
| | | Glass fiber | 2.00 |
| | 100.00 | | 100.00 |

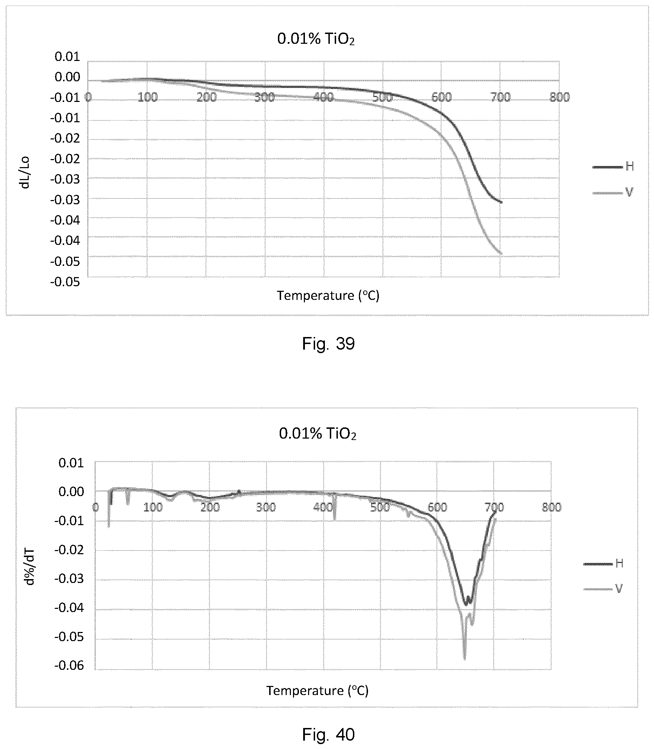

The composite as described in Table 20 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 38 depicts the dimensional variation (%) as a function of the sample temperature on the vertical and horizontal axes. Fig. 39 depicts the dimensions variation (dL/L₀) as a function of the sample temperature on the vertical and horizontal axes. Fig. 40 depicts the percentage of dL/L₀ variation as a function of the temperature variation.

**Table 21 - Composite with 0.01% (by volume) of Nb2O5 Nanoparticles**

| **Composite** | **Volume (%)** | **Raw material** | **Volume (%)** |
|---|---|---|---|
| *Matrix* | 90.00 | Blast furnace slag | 27.52 |
| | | Rice husk silica | 4.48 |
| | | Sodium silicate | 40.00 |
| | | Distilled water | 18.00 |
| *Reinforcement* | 10.00 | Rock wool | 5.00 |
| | | Steel fiber | 3.00 |
| | | Glass fiber | 2.00 |
| | 100.00 | | 100.00 |

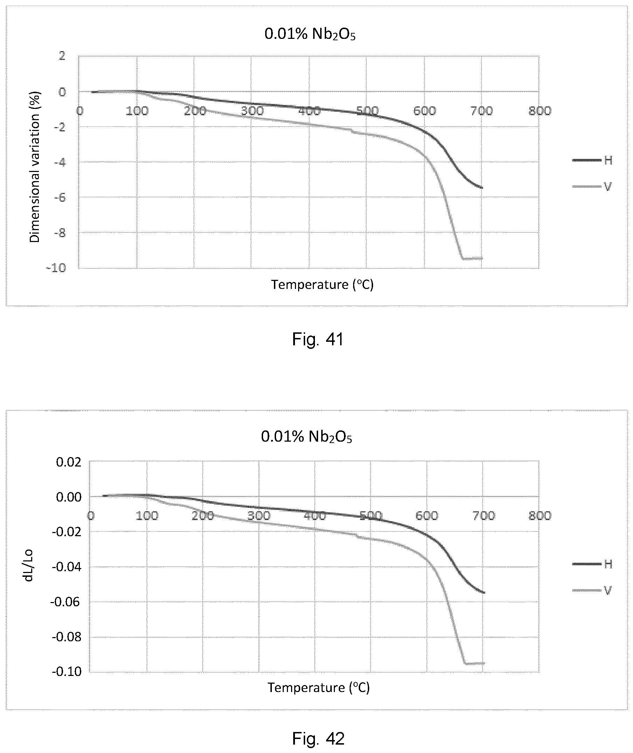

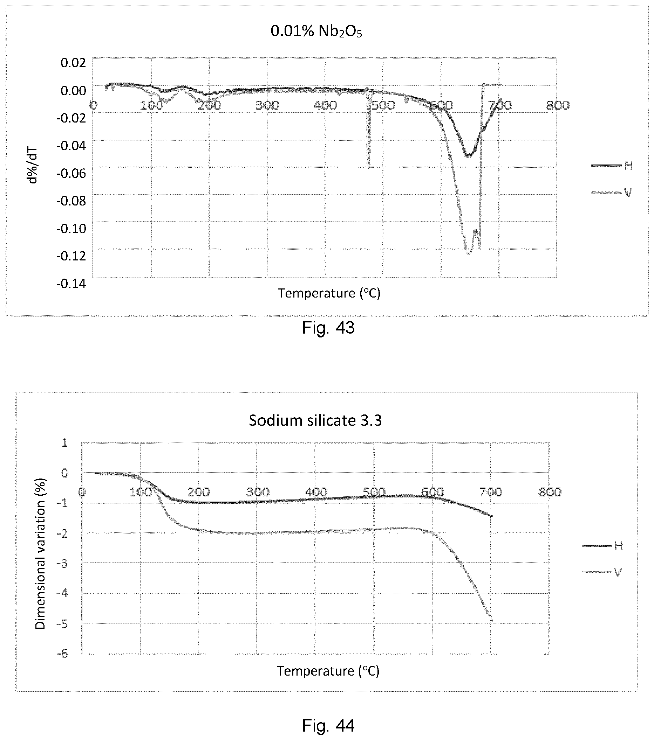

The composite as described in Table 21 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 41 depicts the dimensional variation (%) as a function of the sample temperature on the vertical and horizontal axes. Fig. 42 depicts the dimensions variation (dL/L₀) as a function of the sample temperature on the vertical and horizontal axes. Fig. 43 depicts the percentage of dL/L₀ variation as a function of the temperature variation.

**Table 22 - Composite with Sodium Silicate Si₂O/Na₂O=3.3**

| **Composite** | **Volume (%)** | **Raw material** | **Volume (%)** |
|---|---|---|---|
| *Matrix* | 90.00 | Blast furnace slag 35 µm | 27.52 |
| | | Rice husk silica | 4.48 |
| | | Sodium silicate MQ 3.3 | 58.00 |
| | | Distilled water | 0.00 |
| *Reinforcement* | 10.00 | Rock wool | 5.00 |
| | | Steel fiber | 2.00 |
| | | Glass fiber | 3.00 |
| | 100.00 | | 100.00 |

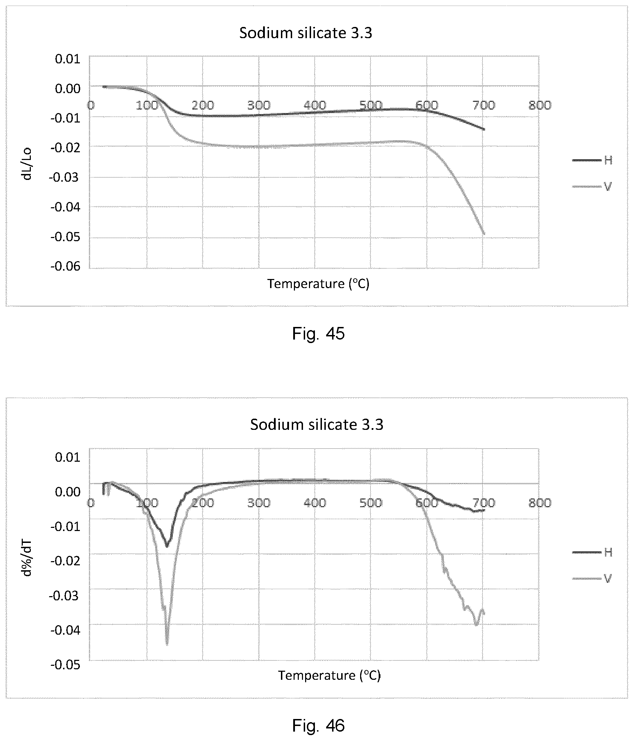

The composite as described in Table 22 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 44 depicts the dimensional variation (%) as a function of the sample temperature on the vertical and horizontal axes. Fig. 45 depicts the dimensions variation (dL/L₀) as a function of the sample temperature on the vertical and horizontal axes. Fig. 46 depicts the percentage of dL/L₀ variation as a function of the temperature variation.

**Table 23 - Composite with 2% (by volume) of Coarse Refractory as Aggregate Material**

| **Composite** | **Volume (%)** | **Raw material** | **Volume (%)** |
|---|---|---|---|
| *Matrix* | 88.00 | Blast furnace slag 35 µm | 26.91 |
| | | Rice husk silica | 4.38 |
| | | Sodium silicate | 39.11 |
| | | Distilled water | 17.60 |
| *Aggregate* | 2.00 | Coarse refractory | 2.00 |
| *Reinforcement* | 10.00 | Rock wool | 5.00 |
| | | Steel fiber | 3.00 |
| | | Glass fiber | 2.00 |
| | 100.00 | | 100.00 |

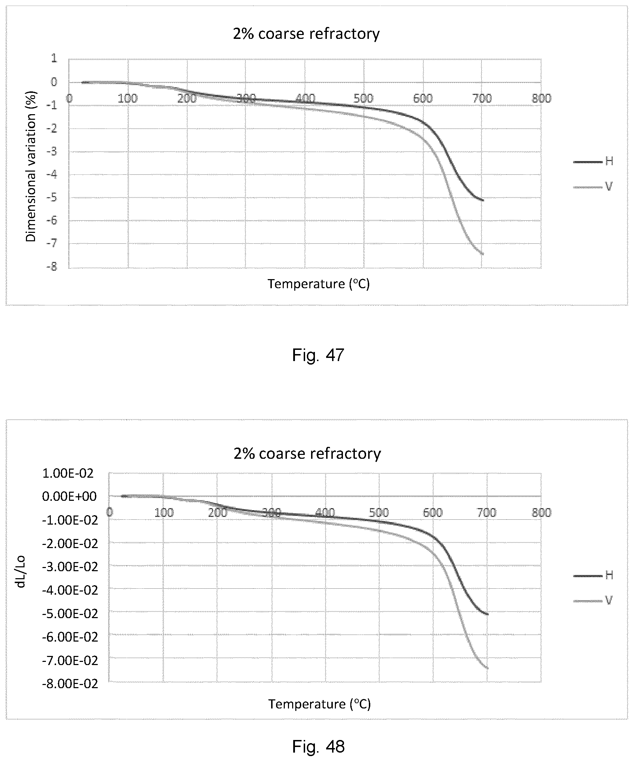

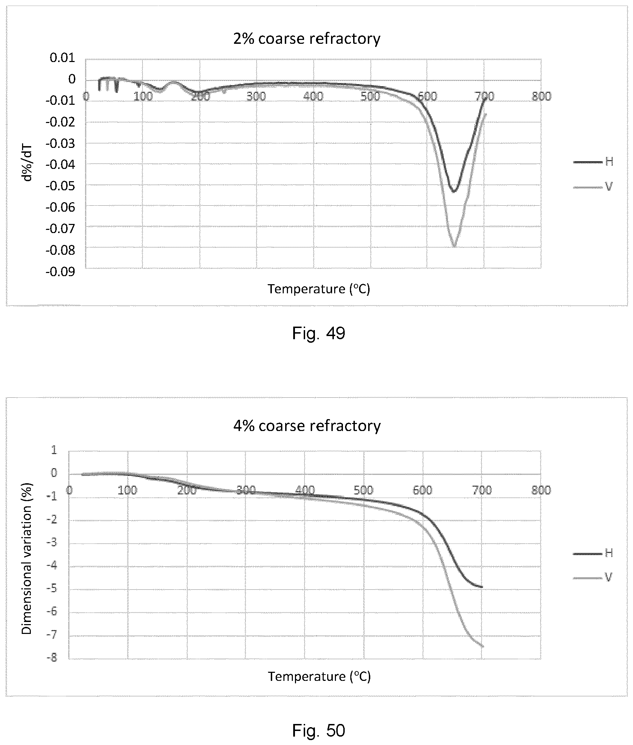

The composite as described in Table 23 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 47 depicts the dimensional variation (%) as a function of the sample temperature on the vertical and horizontal axes. Fig. 48 depicts the dimensions variation (dL/L₀) as a function of the sample temperature on the vertical and horizontal axes. Fig. 49 depicts the percentage of dL/L₀ variation as a function of the temperature variation.

**Table 24 - Composite with 4% (by volume) of Coarse Refractory as Aggregate Material**

| **Composite** | **Volume (%)** | **Raw material** | **Volume (%)** |
|---|---|---|---|
| *Matrix* | 86.00 | Blast furnace slag 35 µm | 26.30 |
| | | Rice husk silica | 4.28 |
| | | Sodium silicate | 38.22 |
| | | Distilled water | 17.20 |
| *Aggregate* | 4.00 | Coarse refractory | 4.00 |
| *Reinforcement* | 10.00 | Rock wool | 5.00 |
| | | Steel fiber | 3.00 |
| | | Glass fiber | 2.00 |
| | 100.00 | | 100.00 |

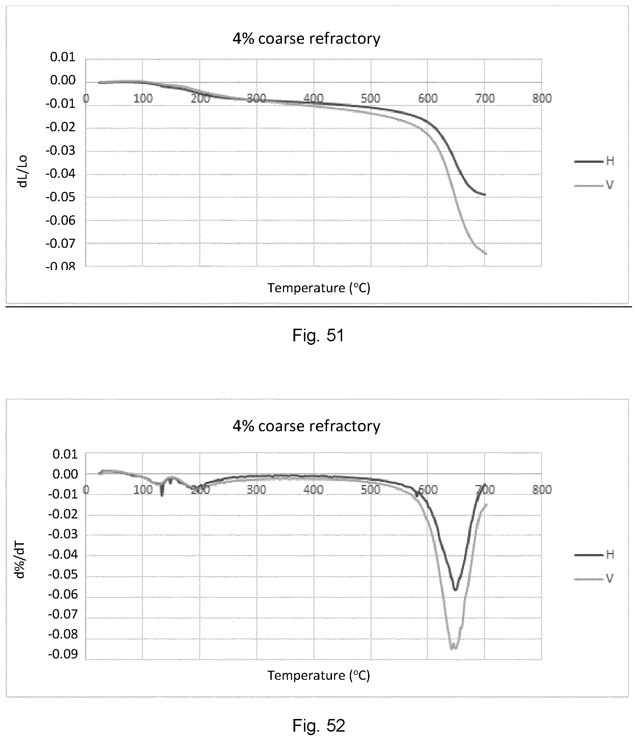

The composite as described in Table 24 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 50 depicts the dimensional variation (%) as a function of the sample temperature on the vertical and horizontal axes. Fig. 51 depicts the dimensions variation (dL/L₀) as a function of the sample temperature on the vertical and horizontal axes. Fig. 52 depicts the percentage of dL/L₀ variation as a function of the temperature variation.

**Table 25 - Composite with 0.001% (by volume) of Nb2O5 Nanoparticles**

| **Composite** | **Volume (%)** | **Raw material** | **Volume (%)** |
|---|---|---|---|
| *Matrix* | 90.00 | Blast furnace slag | 27.52 |
| | | Rice husk silica | 4.48 |
| | | Sodium silicate | 40.00 |
| | | Distilled water | 18.00 |
| *Reinforcement* | 10.00 | Rock wool | 5.00 |
| | | Steel fiber | 3.00 |
| | | Glass fiber | 2.00 |
| | 100.00 | | 100.00 |

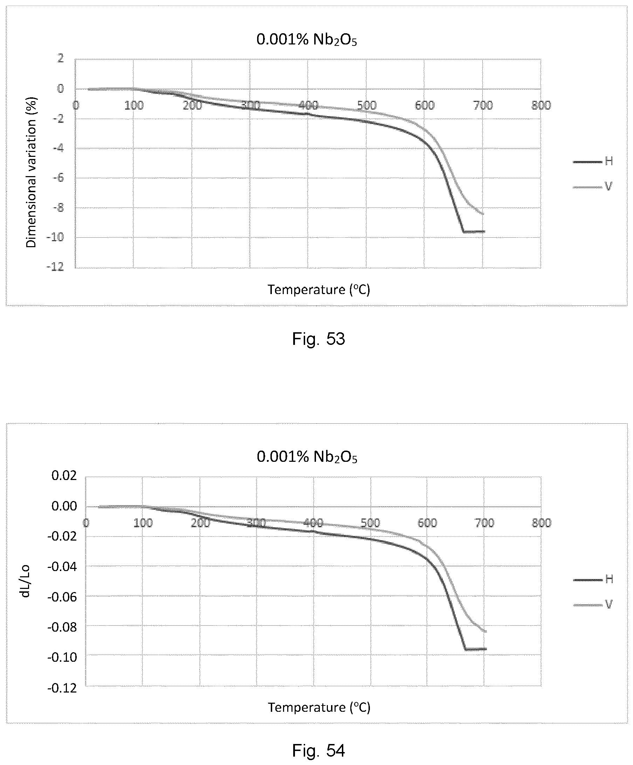

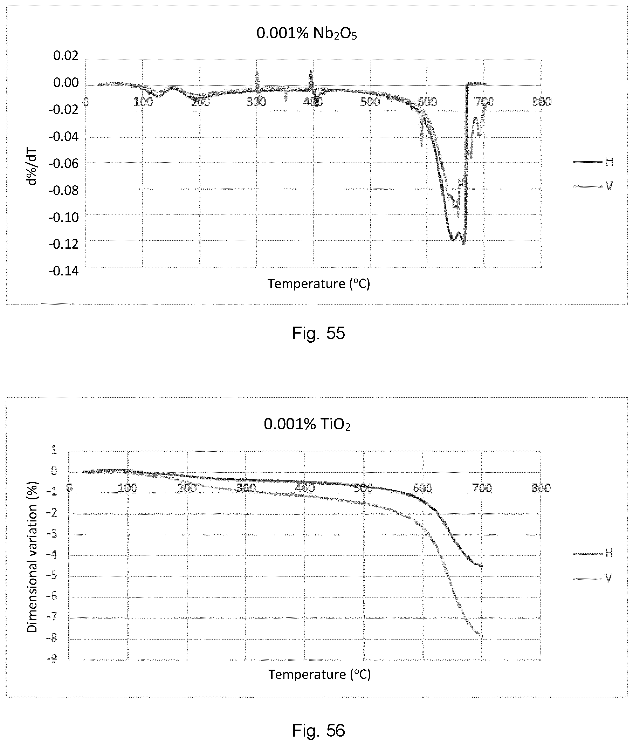

The composite as described in Table 25 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 53 depicts the dimensional variation (%) as a function of the sample temperature on the vertical and horizontal axes. Fig. 54 depicts the dimensions variation (dL/L₀) as a function of the sample temperature on the vertical and horizontal axes. Fig. 55 depicts the percentage of dL/L₀ variation as a function of the temperature variation.

**Table 26 - Composite with 0.001% (by volume) of TiO2 Nanoparticles**

| **Composite** | **Volume (%)** | **Raw material** | **Volume (%)** |
|---|---|---|---|
| *Matrix* | 90.00 | Blast furnace slag | 27.52 |
| | | Rice husk silica | 4.48 |
| | | Sodium silicate | 40.00 |
| | | Distilled water | 18.00 |
| *Reinforcement* | 10.00 | Rock wool | 5.00 |
| | | Steel fiber | 3.00 |
| | | Glass fiber | 2.00 |
| | 100.00 | | 100.00 |

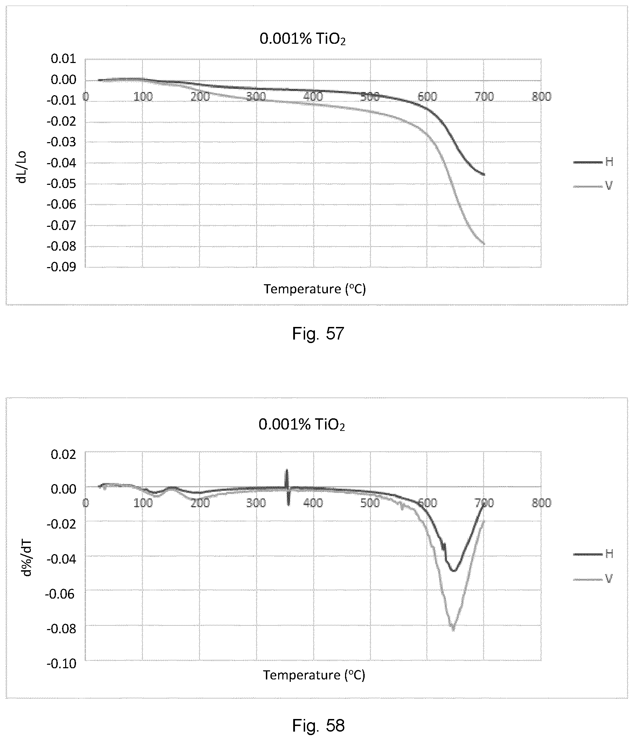

The composite as described in Table 26 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 56 depicts the dimensional variation (%) as a function of the sample temperature on the vertical and horizontal axes. Fig. 57 depicts the dimensions variation (dL/L₀) as a function of the sample temperature on the vertical and horizontal axes. Fig. 58 depicts the percentage of dL/L₀ variation as a function of the temperature variation.

**Table 27 - Composite with 2% (by volume) Coarse Quartz + 2% (by volume) Fine Quartz as Aggregate Material**

| **Composite** | **Volume (%)** | **Raw material** | **Volume (%)** |
|---|---|---|---|
| *Matrix* | 86.00 | Blast furnace slag 35 µm | 26.30 |
| | | Rice husk silica | 4.28 |
| | | Sodium silicate | 38.22 |
| | | Distilled water | 17.20 |
| *Aggregate* | 4.00 | Coarse quartz | 2.00 |
| | | Fine quartz | 2.00 |
| *Reinforcement* | 10.00 | Rock wool | 5.00 |
| | | Steel fiber | 3.00 |
| | | Glass fiber | 2.00 |
| | 100.00 | | 100.00 |

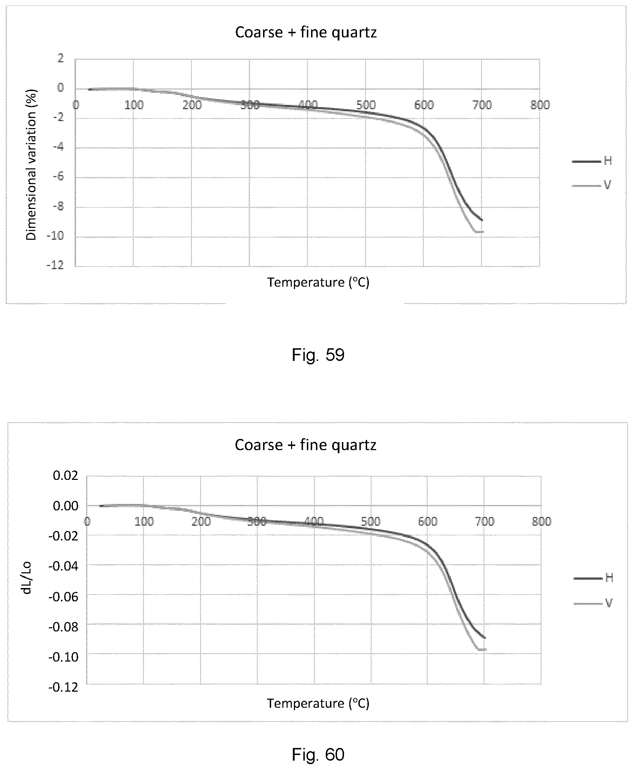

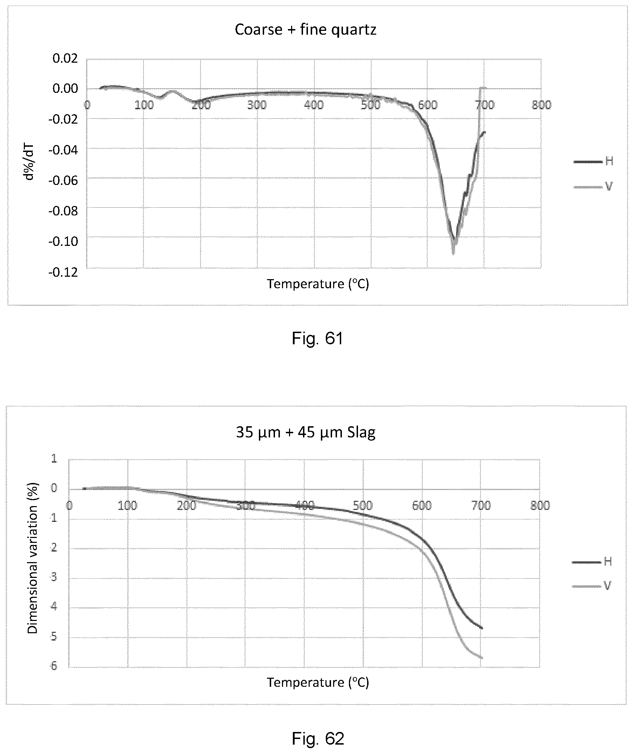

The composite as described in Table 27 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 59 depicts the dimensional variation (%) as a function of the sample temperature on the vertical and horizontal axes. Fig. 60 depicts the dimensions variation (dL/L₀) as a function of the sample temperature on the vertical and horizontal axes. Fig. 61 depicts the percentage of dL/L₀ variation as a function of the temperature variation.

**Table 28 - Composite with 35 µm + 45 µm Slag and 2% (by volume) of Coarse Quartz + 2% (by volume) of Fine Quartz as Aggregate Material**

| **Composite** | **Volume (%)** | **Raw material** | **Volume (%)** |
|---|---|---|---|
| *Matrix* | 86.00 | Blast furnace slag 35 µm + 45 µm | 26.30 |
| | | Rice husk silica | 4.28 |
| | | Sodium silicate | 38.22 |
| | | Distilled water | 17.20 |
| *Aggregate* | 4.00 | Coarse quartz | 2.00 |
| | | Fine quartz | 2.00 |
| *Reinforcement* | 10.00 | Rock wool | 5.00 |
| | | Steel fiber | 3.00 |
| | | Glass fiber | 2.00 |
| | 100.00 | | 100.00 |

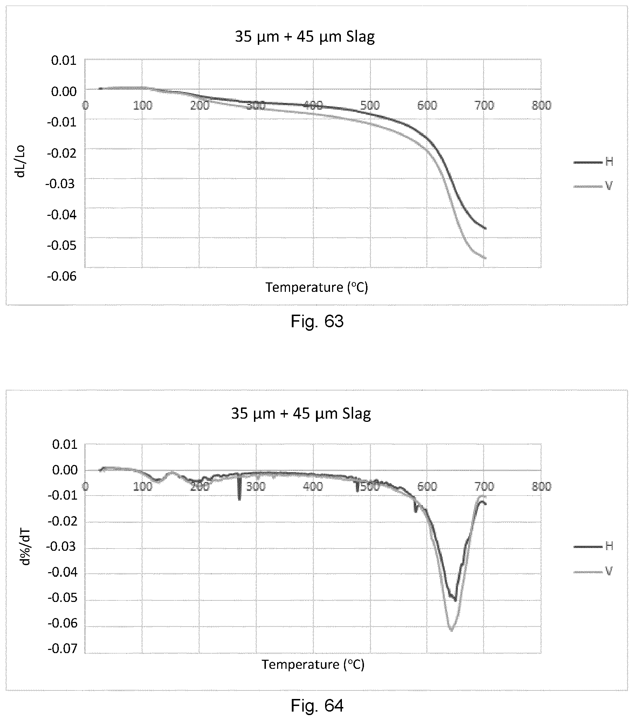

The composite as described in Table 28 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 62 depicts the dimensional variation (%) as a function of the sample temperature on the vertical and horizontal axes. Fig. 63 depicts the dimensions variation (dL/L₀) as a function of the sample temperature on the vertical and horizontal axes. Fig. 64 depicts the percentage of dL/L₀ variation as a function of the temperature variation.

**Table 29 - Composite with 2% (by volume) of Fine Refractory as Aggregate Material**

| **Composite** | **Volume (%)** | **Raw material** | **Volume (%)** |
|---|---|---|---|
| *Matrix* | 88.00 | Blast furnace slag 35 µm | 26.91 |
| | | Rice husk silica | 4.38 |
| | | Sodium silicate | 39.11 |
| | | Distilled water | 17.60 |
| *Aggregate* | 2.00 | Fine refractory | 2.00 |
| *Reinforcement* | 10.00 | Rock wool | 5.00 |
| | | Steel fiber | 3.00 |
| | | Glass fiber | 2.00 |
| | 100.00 | | 100.00 |

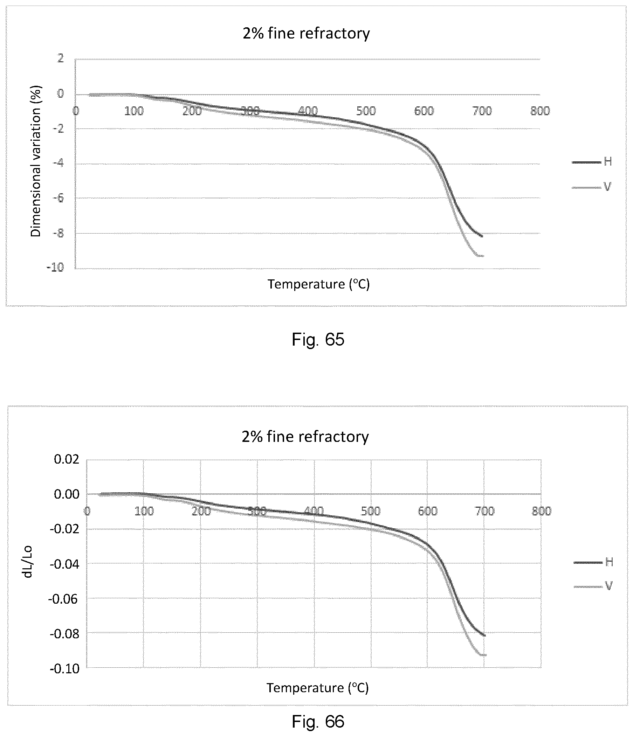

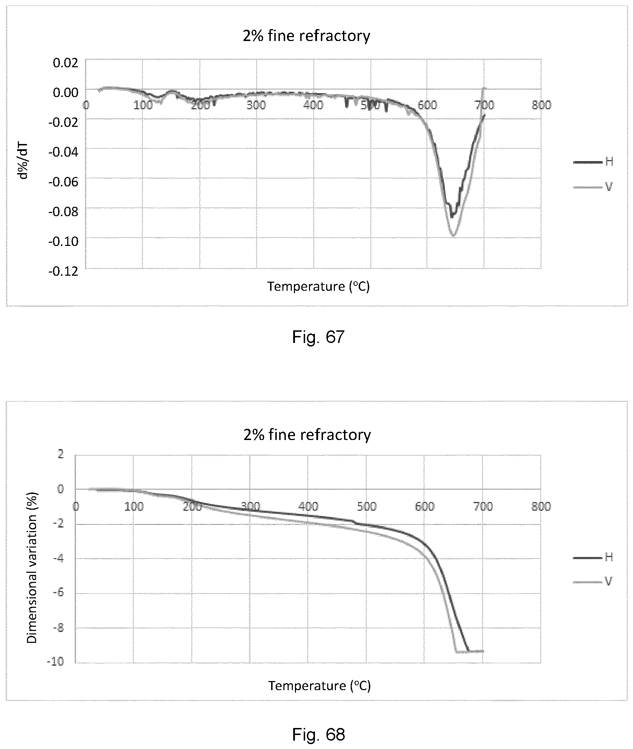

The composite as described in Table 29 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 65 depicts the dimensional variation (%) as a function of the sample temperature on the vertical and horizontal axes. Fig. 66 depicts the dimensions variation (dL/L₀) as a function of the sample temperature on the vertical and horizontal axes. Fig. 67 depicts the percentage of dL/L₀ variation as a function of the temperature variation.

**Table 30 - Composite with 2% (by volume) of Medium Refractory as Aggregate Material**

| **Composite** | **Volume (%)** | **Raw material** | **Volume (%)** |
|---|---|---|---|
| *Matrix* | 88.00 | Blast furnace slag 35 µm | 26.91 |
| | | Rice husk silica | 4.38 |
| | | Sodium silicate | 39.11 |
| | | Distilled water | 17.60 |
| *Aggregate* | 2.00 | Medium refractory | 2.00 |
| *Reinforcement* | 10.00 | Rock wool | 5.00 |
| | | Steel fiber | 3.00 |
| | | Glass fiber | 2.00 |
| | 100.00 | | 100.00 |

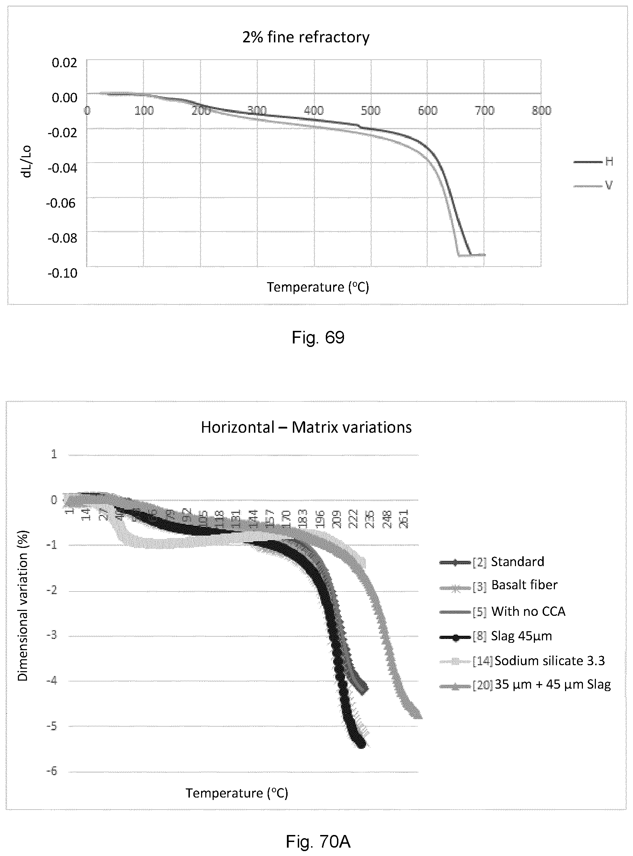

The composite as described in Table 30 was analyzed by horizontal and vertical dilatometry test in a Netzsch DIL 402 Espedis Classic dilatometer with a heating rate of 3°C/min in a synthetic air atmosphere and sample geometry of 8 x 8 x 25 mm. Fig. 68 depicts the dimensional variation (%) as a function of the sample temperature on the vertical and horizontal axes. Fig. 69 depicts the dimensions variation (dL/L₀) as a function of the sample temperature on the vertical and horizontal axes.

### Example 6 - Comparison of Dilatometry Results

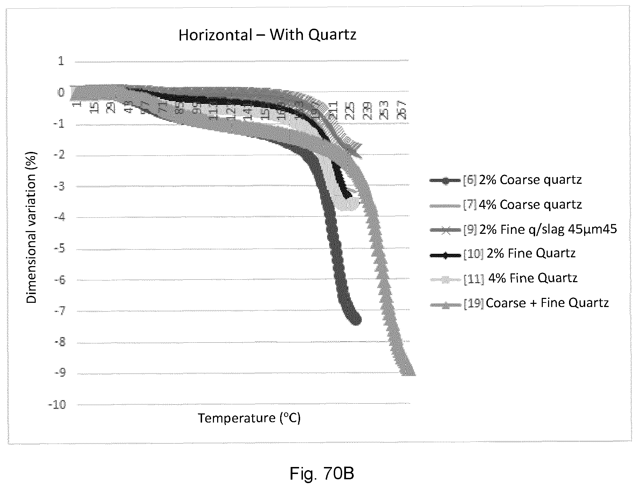

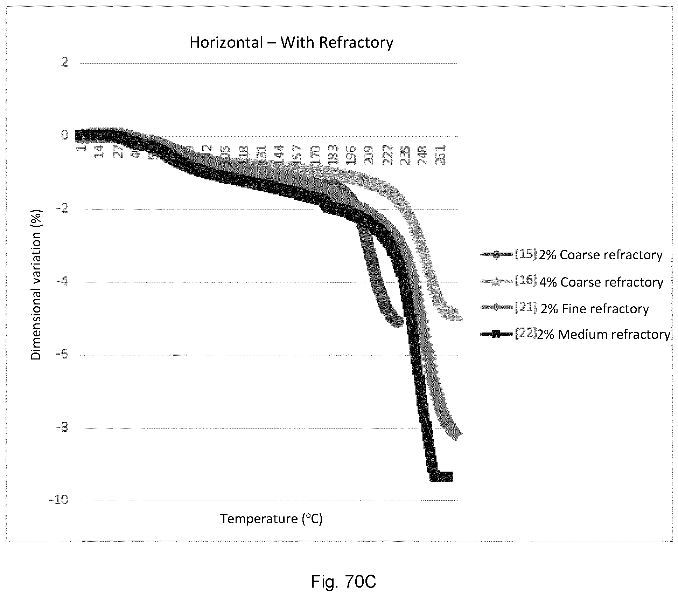

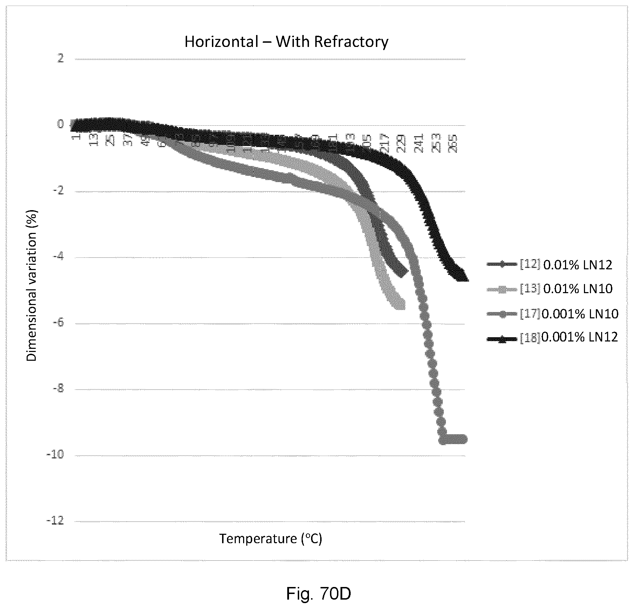

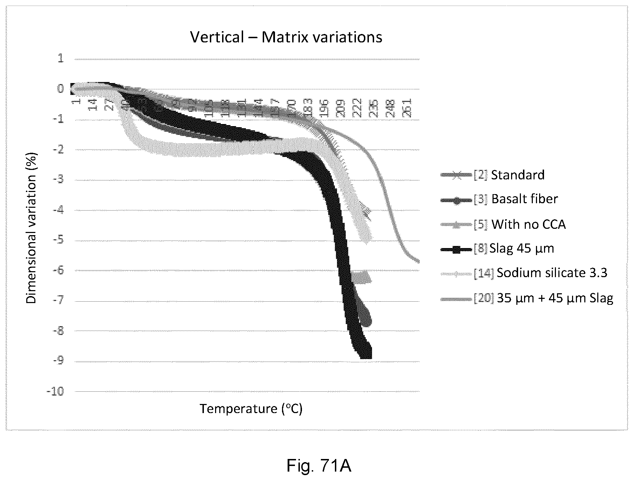

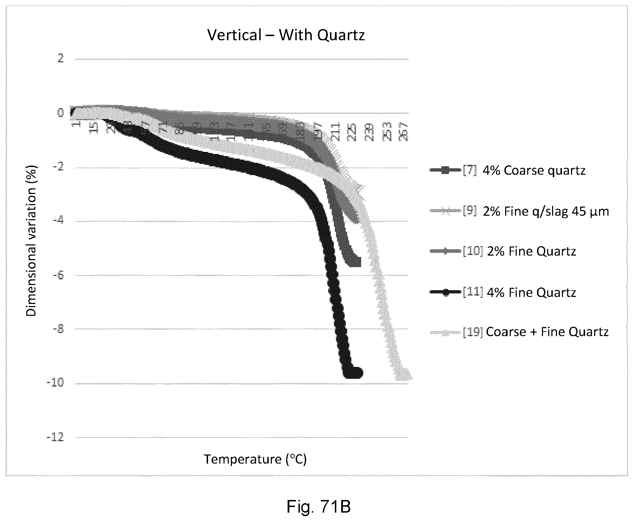

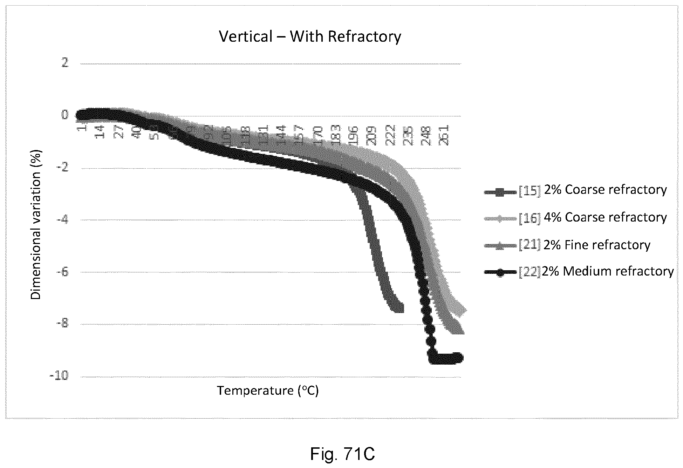

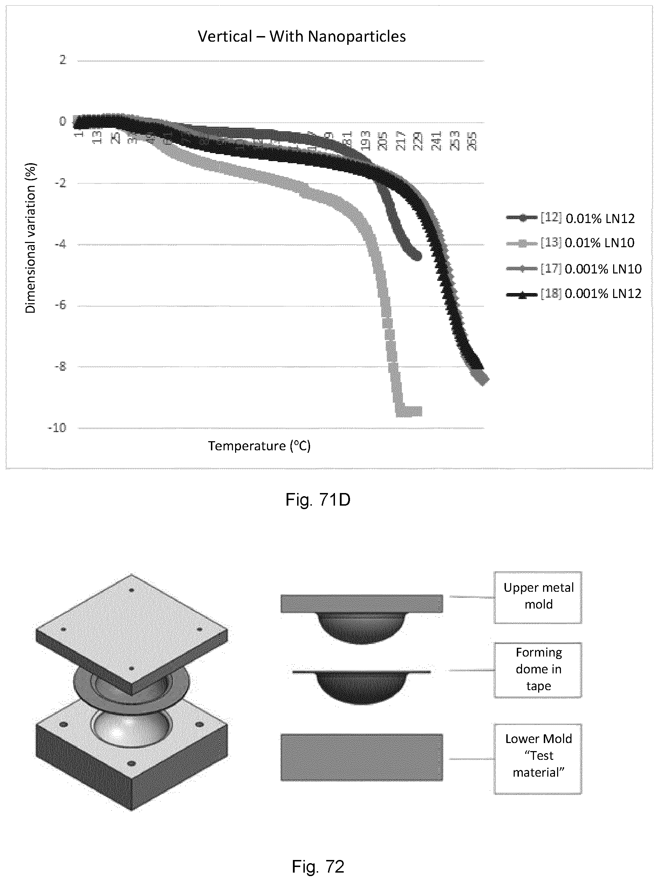

The dimensional variation results (%) as described in example 5 were compared for each sample. Figs. 70A, 70B, 70C, and 70D depict a comparison of the dimensional variation (%) as a function of the temperature (°C) on the horizontal axis for each sample as described in Tables 11-30. Figs. 71A, 71B, 71C, and 71D depict a comparison of the dimensional variation (%) as a function of the temperature (°C) on the vertical axis for each sample as described in Tables 11-30.

### Example 7 - Quasi-Static Strength Test

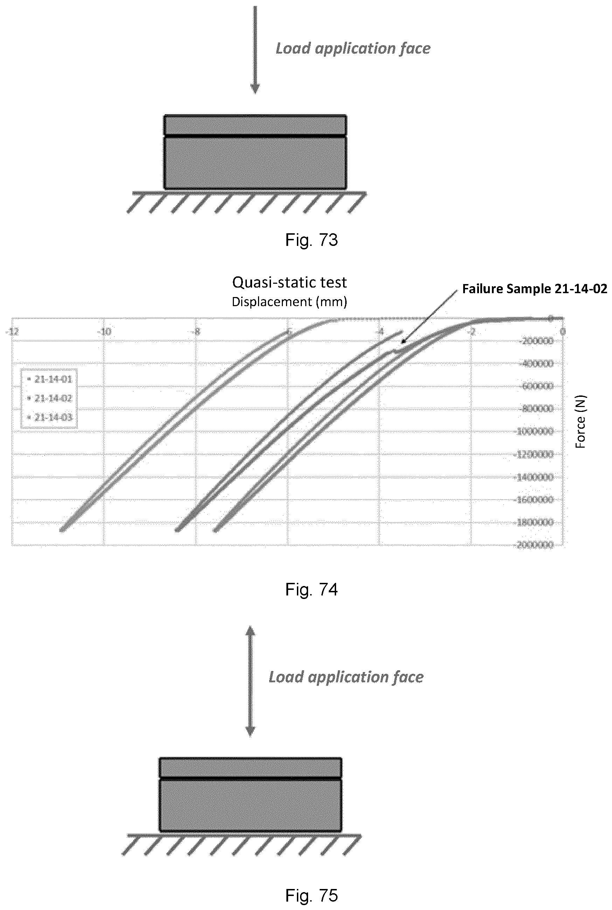

Molds made with the composite described above in Table 11 were produced as described in example 2 above. These were subjected to a quasi-static strength test, which has three components: (1) an upper metal mold, (2) a tape-forming dome and (3) a lower mold to be tested. The purpose of the test is to determine the maximum load until fracture, the method is to apply load to the tested material until failure. Fig. 72 depicts the components used in the test. Fig. 73 depicts the direction of load application. For the test, 3 identical molds were produced to perform the quasi-static strength test in triplicate (named samples 21-14-01, 21-14-02 and 21-14-03). The lower face of the test bodies represents a square with sides measuring 280.00 mm. Table 31 below shows the test results:

**Table 31 - Quasi-Static Strength Test Results**

| | **Maximum load (kN)** | **Failure (kN)** |
|---|---|---|
| 21-14-01 | -1873.51 | NA |
| 21-14-02 | -1873.11 | -301.74 |
| 21-14-03 | -1873.92 | NA |

Fig. 74 shows a graph of displacement (mm) as a function of the applied force for the three samples of the quasi-static strength test. The graph also indicates the point where a failure was detected for sample 21-14-02.

### Example 7 - Dynamic Strength

Molds made with the composite described above in Table 11 were produced as described in example 2 above. These were subjected to a dynamic strength test, which has three components: (1) an upper metal mold, (2) um tape-forming dome, (3) a lower mold to be tested. The object of the test is to determine fatigue behavior, the method is to collect displacement time and force data. Fig. 72 depicts the components used in the test. Fig. 75 depicts the direction of load application. For the test, 3 identical molds were produced to perform the dynamic strength test in triplicate (named samples 21-14-04, 21-14-05 and 21-14-06). The lower face of the test bodies represents a square with sides measuring 280.00 mm. Table 32 below shows the test results:

**Table 32 - Dynamic Strength Test Results**

| | **Number of cycles supported** |
|---|---|
| 21-14-04 | 50,000 (run-out) |
| 21-14-05 | 50,000 (run-out) |
| 21-14-06 | 50,000 (run-out) |

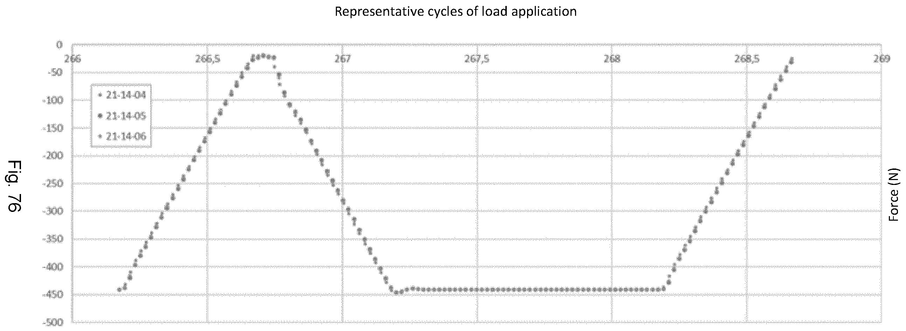

Fig. 76 depicts a graph of the representative load application cycles in the dynamic strength test, showing the force (N) applied as a function of time (sec) for each test sample.

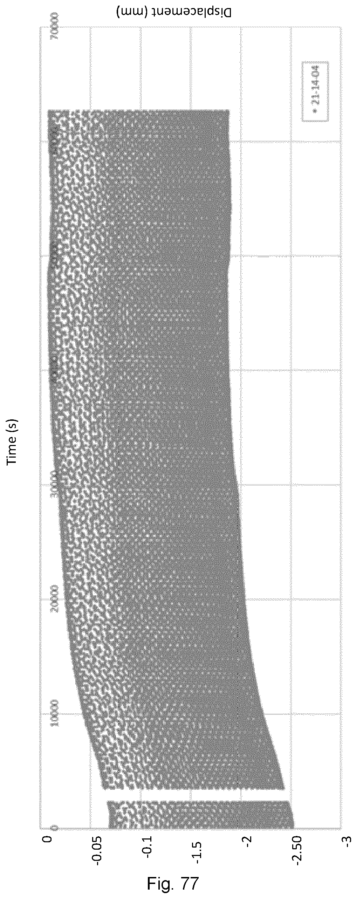

Fig. 77 depicts a representative graph for sample 21-14-04 in the dynamic strength test, showing the displacement (mm) as a function of time (sec).

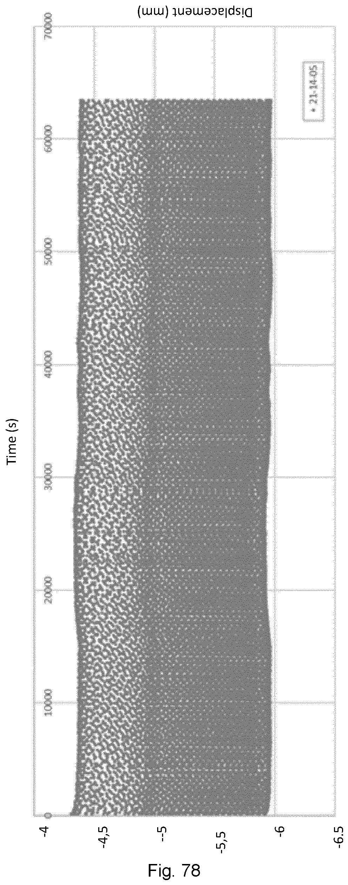

Fig. 78 depicts a representative graph for sample 21-14-05 in the dynamic strength test, showing the displacement (mm) as a function of time (sec).

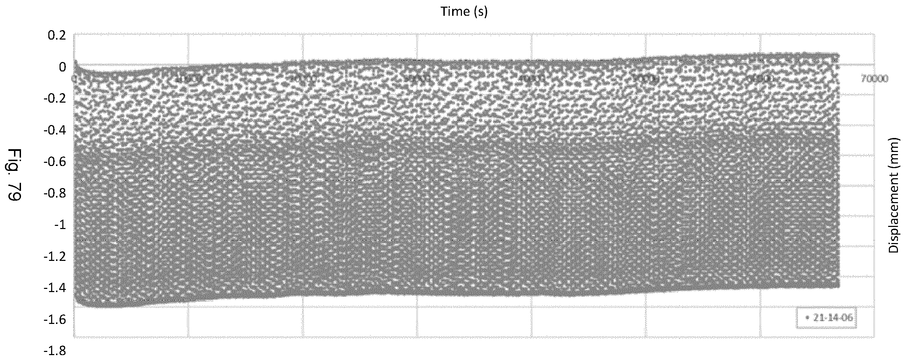

Fig. 79 depicts a representative graph for sample 21-14-06 in the dynamic strength test, showing the displacement (mm) as a function of time (sec).

It is immediately clarified that from the disclosure of the present inventive concept those skilled in the art may consider other ways of implementing the invention that are not identical to those merely exemplified above, such ways may be considered as falling within the scope of the attached claims.

## Claims

1. Inorganic composite for mechanical forming tools and molds, **characterized by** comprising a combination of at least one cement matrix with at least one reinforcing fiber.

2. Composite according to claim 1, **characterized by** the fact that said cement matrix comprises at least one solid precursor and at least one alkaline activating solution.

3. Composite according to claim 2, **characterized by** the fact that said cement matrix comprises between 20 and 50 vol% of solid precursor containing silicates and between 50 and 80 vol% of alkaline activating solution.

4. Composite according to claim 1, **characterized by** further comprising an aggregate material.

5. Composite according to claim 4, **characterized by** the fact that the composite comprises between 75 and 95 vol% of the cement matrix, between 5 and 25 vol% of the reinforcing fiber and between 0 and 20 vol% of the aggregate material.

6. Composite according to claim 1, **characterized by** further comprising a nanofiller.

7. Use of the composite as defined in claim 1, **characterized in that** it is for the manufacture of a mechanical forming tool; an injection mold; a stamping mold; and/or a casting mold.

8. Mechanical forming tool, **characterized by** comprising an inorganic composite material.

9. Tool according to claim 8, **characterized by** the fact that said inorganic composite material comprises a combination of at least one cement matrix with at least one reinforcing fiber.

10. Tool according to claim 8 or 9, **characterized by** the fact that said cement matrix comprises at least one solid precursor with at least one alkaline activating solution.

11. Tool according to claim 8, 9 or 10, **characterized by** the fact that having compressive strength of up to 150 MPa, bending strength of up to 15 MPa and shear strength of up to 40 MPa.

12. Injection and/or stamping and/or casting mold, **characterized by** being of inorganic composite material.

13. Mold according to claim 12, **characterized by** the inorganic composite material comprising a combination of at least one cement matrix with at least one reinforcing fiber.

14. Mold according to claim 12 or 13, **characterized in that** the cement matrix results from the combination of at least one solid precursor with at least one alkaline activating solution.

15. Mold according to claim 12, 13 or 14, **characterized by** the fact that having compressive strength of up to 150 MPa, bending strength of up to 15 MPa and shear strength of up to 40 MPa.

16. Process for manufacturing mechanical forming tool and/or mold, **characterized by** comprising at least one of the steps of:
a. adding at least one alkaline activating solution to a mixture of at least one solid precursor, forming a cement matrix;
b. adding at least one reinforcing fiber;
c. adding the homogenized mixture into a pre-mold with the desired tool or mold geometry; and
d. curing the mixture, optionally with the aid of heat.

17. Process according to claim 16, **characterized by** the fact that comprising the following steps:
- adding, in a container, solid raw materials selected from blast furnace slag, rice husk ash, rock wool and steel fiber and homogenizing it;
- adding an alkaline activating solution to the mixture obtained in the previous step and homogenizing it;
- adding fiberglass to the mixture obtained in the previous step and homogenizing it; and
- pouring the mixture obtained into a mold with the desired geometry, optionally applying vibration and letting it cure until completely cure.
